(19) Europäisches Patentamt — European Patent Office — Office européen des brevets

(11) **EP 3 607 485 B1**

(12) **EUROPEAN PATENT SPECIFICATION**

(45) Date of publication and mention
of the grant of the patent:
**29.07.2020 Bulletin 2020/31**

(51) Int Cl.:
**G06F 21/60** *(2013.01)*     **G06F 21/62** *(2013.01)*

(21) Application number: **18701964.1**

(22) Date of filing: **05.01.2018**

(86) International application number:
**PCT/US2018/012593**

(87) International publication number:
**WO 2018/212794 (22.11.2018 Gazette 2018/47)**

(54) **ENCRYPTED SEARCH CLOUD SERVICE WITH CRYPTOGRAPHIC SHARING**

VERSCHLÜSSELTER SUCH-CLOUD-DIENST MIT KRYPTOGRAPHISCHER TEILUNG

SERVICE EN NUAGE DE RECHERCHE CHIFFRÉE AVEC PARTAGE CRYPTOGRAPHIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2017 US 201762508374 P**

(43) Date of publication of application:
**12.02.2020 Bulletin 2020/07**

(73) Proprietor: **Google LLC**
**Mountain View, CA 94043 (US)**

(72) Inventors:
• **PATEL, Sarvar**
**Mountain View, CA 94043 (US)**
• **YEO, Kevin**
**Mountain View, CA 94043 (US)**
• **PERSIANO, Giuseppe**
**Mountain View, CA 94043 (US)**

(74) Representative: **Betten & Resch**
**Patent- und Rechtsanwälte PartGmbB**
**Maximiliansplatz 14**
**80333 München (DE)**

(56) References cited:
**WO-A1-2016/131044     US-A1- 2006 047 977**
**US-A1- 2016 217 294**

**Description**

TECHNICAL FIELD

This disclosure relates to providing search functionality with cryptographic sharing over encrypted items stored on a distributed system.

BACKGROUND

Enterprises and individual users are using distributed storage systems (i.e., cloud storage services) to store data on memory overlying multiple memory locations. Many of these enterprises and individuals encrypt their data before uploading the data onto the distributed storage system. In order to use essential functionalities offered by the cloud storage services, such as performing search queries on stored data, enterprises are required to provide plaintext access to the cloud storage services. As a result, some government and sensitive private sectors, such as health, finance, and legal may be reluctant to use cloud storage services, despite their increased convenience and cost advantages. Additionally, encryption alone may not suffice for ensuring data privacy, as the mere knowledge of data access patterns can provide a significant amount of information about the data without ever needing to decrypt the data.

SUMMARY

One aspect of the disclosure provides a method for sharing read access. The method includes receiving, at data processing hardware, a shared read access command from a sharor sharing read access to a sharee for a document stored on memory hardware in communication with the data processing hardware. The shared read access command includes an encrypted value and a first cryptographic share value based on a write key for the document, a read key for the document, a document identifier identifying the document, and a sharee identifier identifying the sharee. The method also includes receiving, at the data processing hardware, a shared read access request from the sharee and multiplying, by the data processing hardware, the first cryptographic share value and the second cryptographic share value to determine a cryptographic read access value. The shared read access request includes the sharee identifier, the document identifier, and a second cryptographic share value based on the read key for the document and a sharee cryptographic key associated with the sharee. The cryptographic read access value authorizes read access to the sharee for the document. The method further includes storing, by the data processing hardware, a read access token for the sharee including the cryptographic read access value and the encrypted value in a user read set of the memory hardware. The user read set includes a list of sharee identifiers associated with sharees having read access to the document.

Implementations of the disclosure may include one or more of the following optional features. In some implementations, the sharor is configured to: send the read key for the document to the sharee over a secure and authenticated communication link; create metadata for the document; compute the encrypted value by encrypting the metadata for the document using the read key; and send the shared read access command to the data processing hardware. The first cryptographic share value may be calculated based on a function of the write key and the document identifier divided by a function of the read key and the sharee identifier. The second cryptographic share value may be calculated based on a function of the read key and the sharee identifier divided by a function of the sharee cryptographic key and the document identifier.

In some examples, the method includes receiving, at the data processing hardware, a revoke read access command from the sharor revoking read access from the sharee for the document stored on the memory hardware and removing, by the data processing hardware, the read access token for the sharee from the user read set. In response to receiving the revoke read access command, the method may include determining, by the data processing hardware, whether a corresponding write access token exists for the sharee in a user write set of the memory hardware. When the corresponding write access token exists, the method may include removing, by the data processing hardware, the write access token from the memory hardware.

After storing the read access token for the sharee, the method may include receiving, at the data processing hardware, a search query for a keyword in the document from the sharee. The search query may include the sharee identifier, the document identifier and a cryptographic search value based on the read key for the document, the keyword, and the sharee cryptographic key associated with the sharee. The method may also include retrieving, by the data processing hardware, the read access token for the sharee from the user read set of the memory hardware and computing, by the data processing hardware, a cryptographic word set token based on the received cryptographic search value and the retrieved read access token for the sharee. The method may further include determining, by the data processing hardware, whether the computed cryptographic word set token matches a corresponding cryptographic word set token of a word set stored in the memory hardware. When the computed cryptographic word set token matches the corresponding cryptographic word set token of the word set, the method may include retrieving, by the data processing hardware, encrypted word metadata of the document associated with the keyword from the memory hardware and sending, by the data processing hardware, a search result set to the sharee. The query response may include the encrypted document metadata and the encrypted word metadata. The sharee may be configured to decrypt the encrypted document metadata using the read key and decrypt the encrypted word metadata using the read key.

In some implementations, the method includes receiving, at the data processing hardware, a write access token from the sharee based on the write key for the document, the document identifier, the sharee identifier and the sharee cryptographic key. The method may also include storing, by the data processing hardware, the write access token in a user write set of the memory hardware, the user write set including a list of sharee identifiers associated with sharees having write access to the document. The sharee may be configured to receive the write key for the document from the sharor over a secure and authenticated communication link. The method may further include receiving, at the data processing hardware, a revoke write access command from the sharor revoking write access from the sharee for the document stored on the memory hardware and removing, by the data processing hardware, the write access token for the sharee from the user write set.

Another aspect of the disclosure provides a second method for sharing write access. The method includes receiving, at a sharee device associated with a sharee, shared write access permissions from a sharor sharing write access to the sharee for a document stored on a distributed storage system. The shared write access permissions include a read key for the document, a write key for the document and encrypted metadata for the document. The method also includes determining, at the sharee device, a cryptographic write access value based on the write key for the document, a document identifier identifying the document, a sharee identifier identifying the sharee, and a sharee cryptographic key associated with the sharee. The cryptographic write access value authorizes write access to the sharee for the document. The method further includes sending a write access token for the sharee from the sharee device to the distributed storage system. The write access token including the cryptographic write access value. In response to receiving the write access token, the distributed storage system is configured to store the write access token in a user write set. The user write set includes a list of sharee identifiers associated with sharees having write access to the document.

Implementations of the disclosure may include one or more of the following optional features. In some implementations, the sharor may be configured to revoke write access from the sharee for the document stored on the distributed storage system (e.g., after sending the write access token for the sharee) by sending a revoke write access command to the distributed storage system. In response to receiving the revoke write access command, the distributed storage system is configured to remove the write access token for the sharee from the user write set. The method may also include determining, at the sharee device, a cryptographic read access value based on the write key for the document, the document identifier, and the sharee cryptographic key. The cryptographic read access value may authorize read access to the sharee for the document. Sending a read access token for the sharee may include the cryptographic read access value and the encrypted metadata for the document to the distributed storage system. The distributed storage system in response to receiving the read access token, may be configured to store the read access token in a user read set. The user read set may include a list of sharee identifiers associated with sharees having read access to the document.

The sharor may be configured to revoke read access from the sharee for the document stored on the distributed storage system (e.g., after sending the read access token for the sharee) by sending a revoke read access command to the distributed storage system. In response to receiving the revoke read access command, the distributed storage system may be configured to remove the write access token for the sharee from the user write set and remove the read access token for the sharee from the user read set. The sharor may be configured to, prior to receiving the shared write access permissions from the sharor: create the metadata for the document; encrypt the metadata for the document using the read key; and send the shared write access permissions to the sharee over a secure and authenticated communication link. Receiving the shared write access permissions from the sharor may include receiving the shared write access permissions from the sharor over a secure and authenticated communication link.

After sending the write access token for the sharee to the distributed storage system, the method may include creating, by the user device, word metadata for the document associated with a word in the document to be edited and encrypting, by the user device, the word metadata using the read key for the document. The method may also include computing, by the user device, a cryptographic edit value based on the read key for the document, a word identifier associated with the word in the document to be edited, the sharee cryptographic key associated with the sharee, the sharee identifier and the write key for the document. The method may further include sending an edit operation request including the cryptographic edit value, the sharee identifier, the document identifier, and the encrypted word metadata to the distributed storage system. The edit operation request may request the distributed storage system to process an edit operation on the word in the document to be edited.

In response to receiving the edit operation request from the user device, the distributed storage system may be configured to retrieve the write access token from the user write set and compute a cryptographic word set token based on the cryptographic edit value and the retrieved write access token for the sharee. When the edit operation requested by the edit operation request includes a delete operation, the distributed storage system may process the delete operation by removing a corresponding cryptographic word set token of a word set stored by the distributed storage system.

In response to receiving the edit operation request, the distributed storage system may be configured to retrieve the write access token from the user write set and compute a cryptographic word set token based on the cryptographic edit value and the retrieved write access token for the sharee. When the edit operation requested by the edit operation request includes an overwrite operation, the distributed storage system may process the overwrite operation by overwriting a corresponding cryptographic word set token of a word set stored by the distributed storage system with the computed cryptographic word set token and the encrypted word metadata.

In response to receiving the edit operation request from the user device, the distributed storage system may be configured to retrieve the write access token from the user write set and compute a cryptographic word set token based on the cryptographic edit value and the retrieved write access token for the sharee. When the edit operation requested by the edit operation request includes an add operation, the distributed storage system may process the add operation by adding the computed cryptographic word set token and the encrypted word metadata to a word set stored by the distributed storage system.

Yet another aspect of the disclosure provides a system for sharing read access to a document. The system includes a sharor device, a sharee device, data processing hardware of the storage system in communication with the sharor device and the sharee device, and memory hardware in communication with the data processing hardware. The sharor device is configured to create metadata for a document on stored on a storage system and encrypts the metadata using a read key for the document and calculate a first cryptographic share value for the document. The first cryptographic share value is based on a write key for the document, a read key for the document, a document identifier identifying the document, and a sharee identifier identifying a sharee to receive shared read access to the document. The sharee device is associated with the sharee and is configured to receive the read key for the document from the sharor device over a secure and authenticated communication channel and calculate a second cryptographic share value for the document. The second cryptographic share value may be based on the read key for the document and a sharee cryptographic key associated with the sharee. The memory hardware stores instructions that when executed on the data processing hardware cause the data processing hardware to perform operations. The operations include receiving a shared read access command from the sharor device sharing read access to the sharee. The shared read access command includes the encrypted metadata for the document and the first cryptographic share value. The operations also include receiving a shared read access request from the sharee device, the shared read access request including the sharee identifier, the document identifier, and the second cryptographic share value. The operations also include determining a cryptographic read access value based on the first cryptographic share value and the second cryptographic share value, the cryptographic read access value authorizing read access to the sharee for the document. The operations further include storing a read access token for the sharee including the cryptographic read access value and the encrypted value in a user read set of the memory hardware, the user read set including a list of sharee identifiers associated with sharees having read access to the document.

Implementations of the disclosure may include one or more of the following optional features. In some implementations, determining the cryptographic read access value includes multiplying the first cryptographic share value and the second cryptographic share value. The operations may also include receiving a revoke read access command from the sharor device revoking read access from the sharee for the document stored on the storage system and removing the read access token for the sharee from the user read set. In response to receiving the revoke read access command, the operations may include determining whether a corresponding write access token exists for the sharee in a user write set of the memory hardware and when the corresponding write access token exists, removing, by the data processing hardware, the write access token from the memory hardware.

After storing the read access token for the sharee, the operations may include receiving a search query for a keyword in the document from the sharee device. The search query may include the sharee identifier, the document identifier and a cryptographic search value based on the read key for the document, the keyword, and the sharee cryptographic key associated with the sharee. The operations may also include retrieving the read access token for the sharee from the user read set of the memory hardware, computing a cryptographic word set token based on the received cryptographic search value and the retrieved read access token for the sharee, and determining whether the computed cryptographic word set token matches a corresponding cryptographic word set token of a word set stored in the memory hardware. When the computed cryptographic word set token matches the corresponding cryptographic word set token of the word set, the method may include retrieving encrypted word metadata of the document associated with the keyword from the memory hardware and sending a search result set to the sharee device, the query response including the encrypted document metadata and the encrypted word metadata. The sharee may be configured to decrypt the encrypted document metadata using the read key and decrypt the encrypted word metadata using the read key.

Yet another aspect of the disclosure provides a second system for sharing write access to a document. The system includes a sharor device associated with a creator of a document stored on a distributed storage system, a sharee device in communication with the sharor device over a secure and authenticated communication channel, data processing hardware of the distributed storage system in communication with the sharor device and the sharee device, and memory hardware in communication with the data processing hardware. The sharee device is configured to receive shared write access permissions from the sharor device sharing write access for a document stored on the distributed storage system, determine a cryptographic write access value based on the write key for the document, a document identifier identifying the document, a sharee identifier identifying the sharee, and a sharee cryptographic key associated with the sharee and determine a cryptographic read access value based on the write key for the document, the document identifier, and the sharee cryptographic key. The shared write access permissions include a read key for the document, a write key for the document and encrypted metadata for the document. The cryptographic write access value authorizes write access to the sharee for the document. The memory hardware stores instructions that when executed on the data processing hardware cause the data processing hardware to perform operations. The operations include receiving a write access token for the sharee device including the cryptographic write access value from the sharee device and storing the write access token in a user write set. The user write set includes a list of sharee identifiers associated with sharee devices having write access to the document. The operations also include receiving a read access token for the sharee device including the cryptographic read access value and the encrypted metadata for the document from the sharee device and storing the read access token in a user read set. The user read set includes a list of sharee identifiers associated with sharee devices having read access to the document.

Implementations of the disclosure may include one or more of the following optional features. In some implementations, the operations include receiving a revoke write access command from the sharor device to revoke write access from the sharee device for the document stored on the distributed storage system. In response to receiving the revoke write access command, the operations may include removing the write access token for the sharee device from the user write set. The operations may also include receiving a revoke read access command from the sharor device to revoke read access from the sharee device for the document stored on the distributed storage system. In response to receiving the revoke read access command, the operations may also include removing the write access token for the sharee device from the user write set and removing the read access token for the sharee device from the user read set.

The details of one or more implementations of the disclosure are set forth in the accompanying drawings and the description below. Other aspects, features, and advantages will be apparent from the description and drawings, and from the claims.

DESCRIPTION OF DRAWINGS

FIG. 1 is a schematic view of an example system for sharing read and/or write access to one or more documents stored on a distributed storage system.
FIG. 2A is a schematic view of an example read access token stored in a user read set.
FIG. 2B is a schematic view of an example write access token stored in a user write set.
FIG. 3A is a schematic view of an example system for a sharor sharing read access to a sharee for a document stored on a distributed storage system.
FIG. 3B is a schematic view of an example system for a sharing revoking read access from a sharee for a document stored on a distributed storage system.
FIG. 4A is a schematic view of an example system for a sharor sharing write access to a sharee for a document stored on a distributed storage system.
FIG. 4B is a schematic view of an example system for a sharing revoking write access from a sharee for a document stored on a distributed storage system.
FIGS. 5A and 5B are schematic views of a user sending a search query to a searchable symmetric encryption manager for a keyword in an encrypted document stored in a data store.
FIG. 5C provides an example algorithm for a user performing a search for a keyword over a set of documents that the user has read access to.
FIGS. 6A and 6B are schematic views of a user sending an edit operation request to a searchable symmetric encryption manager for processing an edit operation on a word in an encrypted document stored in a data store.
FIG. 6C provides an example algorithm for a user performing an edit operation on a word in a document that the user has write access to.
FIG. 7 is a flowchart of an example method for sharing read access to a document.
FIG. 8 is a flow chart of an example method for sharing write access to a document.
FIG. 9 is a schematic view of an example computing device.

Like reference symbols in the various drawings indicate like elements.

DETAILED DESCRIPTION

Searchable Symmetric Encryption schemes are tailored to allow a cloud storage provider to provide search functionality over a set of encrypted items (e.g., documents, emails, calendar events, notes, database entries, etc.) uploaded and stored at the cloud storage provider. Implementations herein are directed toward allowing customers (e.g., enterprises) to encrypt their data locally with customer side keys before uploading the data to the cloud service provider and without giving the cloud service provider plaintext access to the encrypted data. Namely, the cloud storage provider stores a cryptographic read access token in a user read set for each user authorized by the customer for read access to a corresponding document stored at the cloud storage provider. The cloud storage provider also stores a cryptographic write access token in a user write set for each user authorized by the customer for write access to the corresponding document stored at the cloud storage system. The cryptographic read/write access tokens provide the cloud storage provider with evidence that a corresponding user locally possesses the necessary keys for accessing the document, without requiring the user to expose the keys to the cloud storage provider. Implementations further include recording a cryptographic word set token in a word set for each unique pair of words and documents where a word appears in a corresponding document. Here, the cloud storage provider requires users to provide evidence of having correct permissions to access any cryptographic word set tokens in the word set via their cryptographic read/write access tokens in the user read/write sets. Accordingly, the cloud storage provider is capable of offering cryptographic guarantees on revoking/granting read/write access without the ability to ever determine the values of any cryptographic tokens stored in the user read/write sets and the word sets.

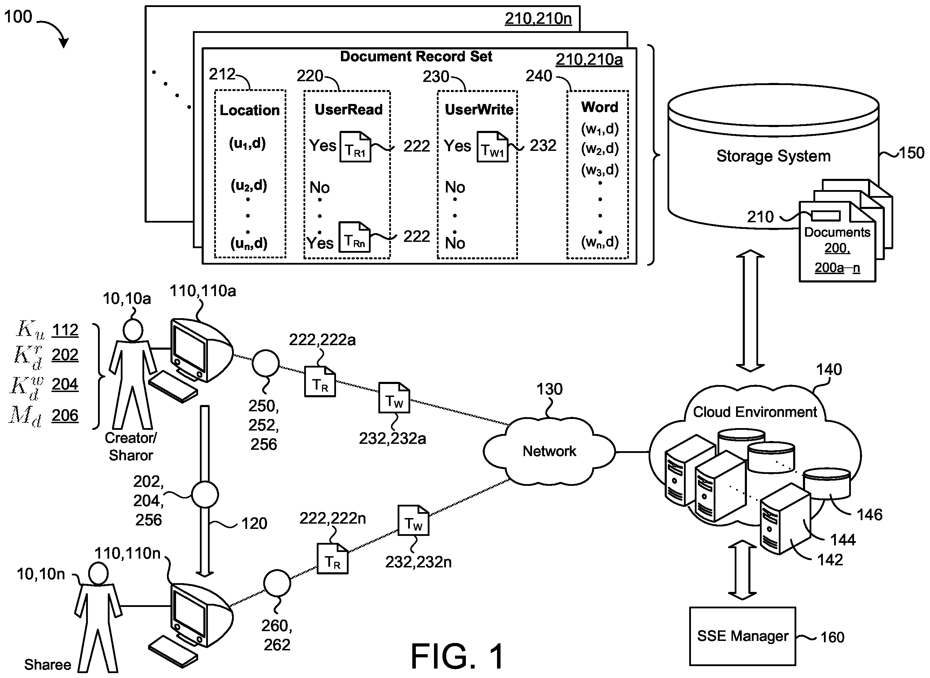

Referring to FIG. 1, in some implementations, a system 100 includes one or more user devices 110, 110a-n associated with one or more users 10, 10a-n, who may communicate, via a network 130, with a remote system 140. The user devices 110 may also communicate with one another via a secure and authenticated channel 120 without revealing any data or private information to the distributed system 140. The remote system 140 may be a distributed system (e.g., cloud environment) having scalable/elastic resources 142. The resources 142 include computing resources 144 and/or storage resources 146. In some implementations, the remote system 140 includes data storage 150 (e.g., a distributed storage system or a data store) configured to store one or more documents 200, 200a-n within memory hardware. The data store 150 stores encrypted documents 200 that may be modified (e.g., adding/deleting/editing) by users 10 having write access and/or searchable by users 10 having read access. As used herein, a document 200 may refer to any encrypted item uploaded onto the remote system 140 for storage within the data store 150, such as, without limitation, emails, calendar events, notes, database entries, etc. In some examples, the remote system 140 executes a Searchable Symmetric Encryption (SSE) manager 160 for managing access to the encrypted documents 200 within the data storage 150.

The user devices 110 can be any computing devices that are capable of communicating with the SSE manager 160 through the network 130 and/or with one another through the secure and authenticated channel 120. In the example shown, the user 10a is associated with a creator/sharor of one or more documents 200 encrypted and stored in the data storage 150 and the user 10n may be associated with a sharee that the creator/sharor 10 shares at least one of write access or read access to any of the encrypted documents 200 stored in the data store 150. Read access provides the sharee 10n with search functionality over each document 200 the sharee 10n has read access, while write access provides the sharee 10n with the ability to modify/edit the search results for each document 200 the sharee 10n has write access. Users 10 without read/write access to encrypted documents 200 are unable to learn anything about those encrypted documents 200. The creator/sharor 10a has both read/write access to each document 200 the sharor 10a creates and stores in the data store 150 of the remote system 150. In some examples, the creator/sharor 10a revokes previously shared read and/or write access for a document 200 from a sharee 10n.

In some implementations, the data store 150 stores a document record set 210, 210a-n for each encrypted document 200. The creator 10 of each document 200 may generate a secure random document identifier d. Each document record set 210 includes a user read set (UserRead) 220, a user write set (UserWrite) 230, and a document word set 240. The user read set 220 includes a set of user identifiers $u_i$, $u_2$,..., $u_n$ associated with users 10 having (or not having) read access to the corresponding document 200 of the document record set 210. For instance, location ($u_1$, d) 212 and location ($u_n$, d) 212 of the user read set 220 each include a corresponding read access token $T_{R1}$, $T_{Rn}$ 222 authorizing read access to the users 10 associated with user identifiers $u_i$, $u_n$ for the document 200 associated with the document identifier d. Conversely, as location ($u_2$, d) 212 of the user read set 220 does not include a corresponding read access token $T_R$ 222, the user 10 associated with the user identifier $u_2$ does not have read access for the document 200. Specifically, the user 10 associated with the user identifier $u_2$ does not possess the cryptographic primitives required by the SSE Manager 160 to authorize read access for the document 200.

The user write set 230 includes a set of user identifiers $u_i$, $u_2$,..., $u_n$ associated with users 10 having (or not having) write access to the corresponding document 200 of the document record set 210. For instance, location ($u_1$, d) 212 of the user write set 230 includes a corresponding write access token $T_{W1}$ 232 authorizing write access to the user 10 associated with the user identifier $u_1$ for the document 200 associated with the document identifier d. By contrast,

location ($u_2$, d) 212 and location ($u_n$, d) 212 of the user write set 230 do not include corresponding write access tokens Tw 232, and therefore, the users 10 associated with user identifiers $u_2$, $u_n$ do not have write access for the document 200. Specifically, the users 10 associated with the user identifiers $u_2$, $u_n$ do not possess the cryptographic primitives required by the SSE Manager 160 to authorize write access for the document. Accordingly, the user 10 associated with the user identifier $u_n$ has read access for the document 200 (i.e., location ($u_n$, d) 212 of the user read set 220 includes the corresponding read access token $T_{Rn}$ 222), but does not have write access for the document 200 (i.e., location ($u_n$, d) 212 of the user write set 230 does not include a corresponding write access token Tw 232.

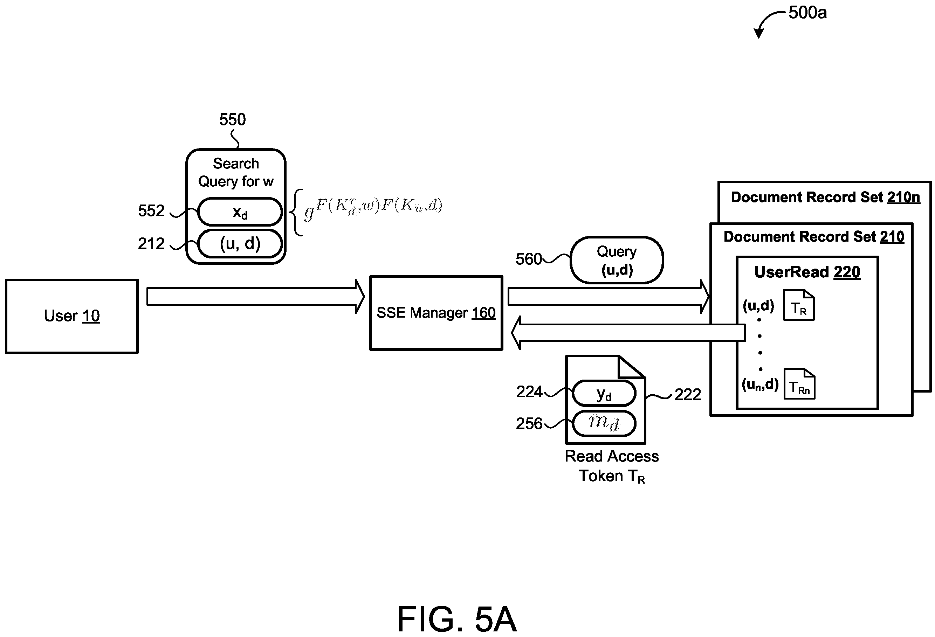

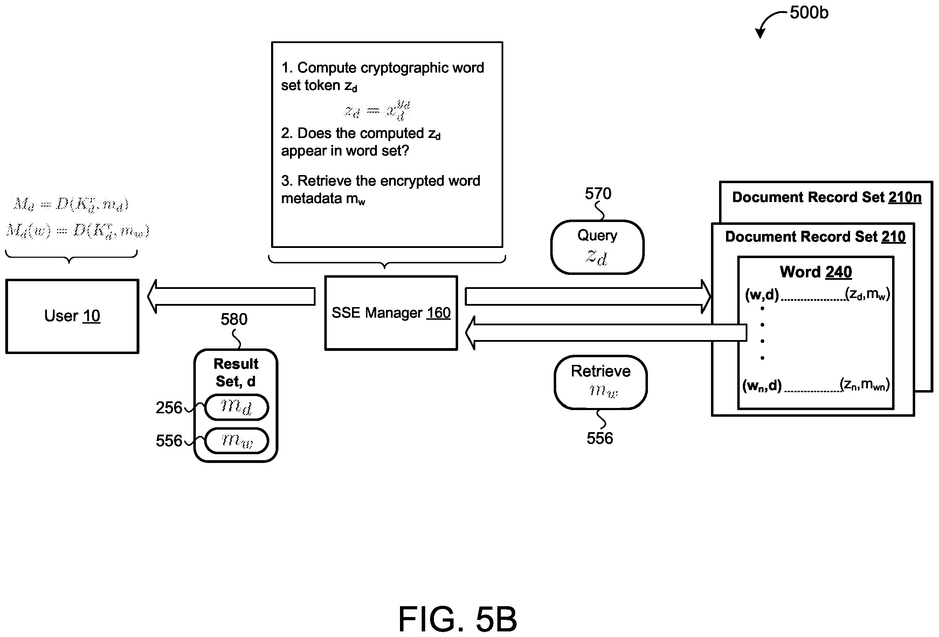

The word set 240 includes a set of words $w_1$, $w_2$, $w_3$,..., $w_n$ each appearing in the corresponding document 200 associated with the document identifier d. For each unique word-document pair ($w_1$, d), ($w_2$, d), ($w_3$, d), ..., ($w_n$, d) in which a corresponding word w appears in the document 200 associated with the document identifier d, the word set 240 may record a corresponding cryptographic word token $z_d$ (FIG. 5A) and corresponding encrypted word metadata $m_w$ 556 (FIG. 5B) for the word w. The encrypted word metadata $m_w$ includes the encryption of word metadata $M_d(w)$ for the document d associated with the word w. The word metadata $M_d(w)$ may include a ranking, extensions, snippets, etc. associated with the word w within the document 200. A user 10 must have correct permissions to access any of the cryptographic word tokens in the word set 240. For instance, a user 10 may use a corresponding read access token $T_R$ to determine a value of a cryptographic word token.

With continued reference to FIG. 1, the user device 110a associated with the creator/sharor 10a may generate a cryptographic user key $K_u$ 112 associated with the sharor 10a, a cryptographic read key $K_d^r$ 202 for the document d 200, a cryptographic write key $K_d^w$ 204 for the document d 200, and metadata $M_d$ 206 associated with the document d 200. The $M_d$ 206 may include a title of the document 200 and/or other information associated with the document. The user device 110a may compute encrypted metadata $m_d$ 256 associated with the document d 200 by encrypting the $M_d$ 206 using the read key $K_d^r$ 202. In some examples, the user device 110a generates a read access token $T_R$ 222a associated with the creator/sharor 10a locally and sends the read access token $T_R$ 222a to the SSE manager 160 for input to the user read set 220. Similarly, the user device 110a may generate a write access token $T_W$ 232a associated with the creator/sharor 10a locally and send the write access token $T_W$ 232a to the SSE manager 160 for input to the user write set 230.

The creator/sharor 10a may attain full control of the keys $K_u$ 112, $K_d^r$ 202, $K_d^w$ 204 and keep the keys private/secret from the remote system 140. For instance, the creator/sharor 10a may provide the SSE manager 160 the read access token 222a to demonstrate that the sharor 10a locally possesses the user key $K_u$ 112 and the read key $K_d^r$ 202 for read access to the encrypted document 200 stored in the data store 150. Similarly, the creator/sharor 10a may provide the SSE manager 160 the write access token 232a to demonstrate that the sharor 10a locally possesses the user key $K_u$ 112 and the write key $K_d^w$ 204 for write access to the encrypted document 200 stored in the data store 150. Accordingly, the creator/sharor 10a does not have to provide any of the sensitive keys $K_u$ 112, $K_d^r$ 202, $K_d^w$ 204 to a service provider of the data store 150 when accessing encrypted documents 200 stored therein.

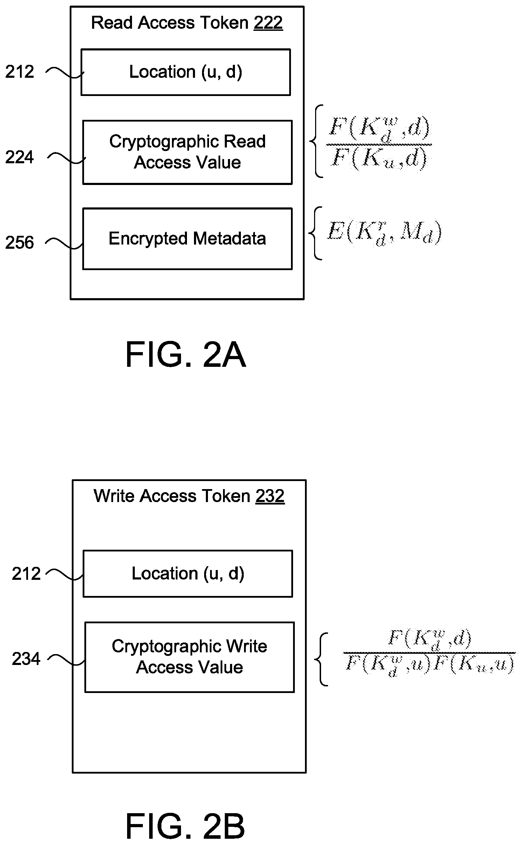

Referring to FIG. 2A, a read access token 222 includes a corresponding location (u, d) 212 in the user read set 220, a cryptographic read access value 224, and the encrypted metadata $m_d$ 256. In some examples, a user 10 possessing the write key $K_d^w$ 204 and the encrypted metadata $m_d$ 256 may generate the read access token 222 locally and send the read access token 222 to the SSE manager 160 for input to the user read set 220 at the corresponding location (u, d) 212. In other examples, when the user 10 corresponds to a sharee possessing only the read key $K_d^r$ 202, the SSE manager 160 (e.g., data processing hardware) may generate the read access token 222 for the user 10 and insert the read access token 222 into the user read set 220 at the corresponding location (u, d) 212. In the example shown, the cryptographic read access value 224 includes a quotient of a pseudorandom function F of the write key $K_d^w$ 204 and the document identifier d divided by a pseudorandom function F of the user key $K_u$ 112 and the document identifier d. For instance, the cryptographic read access value 224 may be calculated as follows.

$$\text{Cryptographic Read Access Value} = \frac{F(K_d^w, d)}{F(K_u, d)} \quad (1)$$

Referring to FIG. 2B, a write access token 232 includes a corresponding location (u, d) 212 in the user write set 230 and a cryptographic write access value 234. A user device 110 associated with a user 10 in possession of the write key $K_d^w$ 204 may generate the write access token 232 for the user 10 locally and send the write access token 232 to the SSE manager 160 for input to the user write set 230 at the corresponding location (u, d) 212. In the example shown, the cryptographic write access value 234 includes a quotient of a pseudorandom function F of the write key $K_d^w$ 204 and the document identifier d divided by a pseudorandom function F of the write key $K_d^w$ 204 and the user identifier u multiplied by a pseudorandom function F of the user key $K_u$ 112 and the user identifier u. For instance, the cryptographic write access value 234 may be calculated as follows.

$$\text{Cryptographic Write Access Value} = \frac{F(K_d^w, d)}{F(K_d^w, u)F(K_u, u)} \quad (2)$$

In some implementations, the creator/sharor 10a shares read access to at least one sharee 10n for a document 200 stored in the data store 150 (e.g., memory hardware) by sending a shared read access command 250 over the network 130 to the SSE manager 160. The shared read access command 250 includes the encrypted metadata $m_d$ 256 and a first cryptographic share value $S_1$ 252 based on the read key $K_d^r$ 202, the write key $K_d^w$ 204, the document identifier d, and a user/sharee identifier $u_n$ identifying the sharee 10n. The creator/sharor 10a additionally provides the read key $K_d^r$ 202 for the document 200 to the at least one sharee 10n. In the example shown, the creator/sharor 10a provides the read key $K_d^r$ 202 by sending the read key $K_d^r$ 202 over the secure and authenticated communication link 120. Accordingly, the read key $K_d^r$ 202 is kept private from the remote system 140 and only provided to users 10 having read access.

In order to attain read access to the document 200, the user device 110n associated with the sharee 10n sends a read access request 260 to the SSE Manager 160. The read access request 260 includes the sharee identifier $u_n$, the document identifier d, and a second cryptographic share value $S_2$ 262 based on the read key $K_d^r$ 202 and a user key $K_{un}$ 112 associated with the sharee 10n. In some implementations, the user device 110 associated with the sharee 10n computes the second cryptographic share value $S_2$ 262 in response to receiving the read key $K_d^r$ 202 from the sharor 10a. The SSE manager 160 computes a corresponding read access token $T_{Rn}$ 222 for the sharee 10n using the first cryptographic share value $S_1$ 252 received from the sharor 10n in the shared read access command 250 and the second cryptographic share value $S_2$ 262 received from the sharee 10a. Thereafter, the SSE manager 160 stores/records the read access token $T_{Rn}$ 222 for the sharee 10n in the user read set 220 at the location 212 ($u_n$, d).

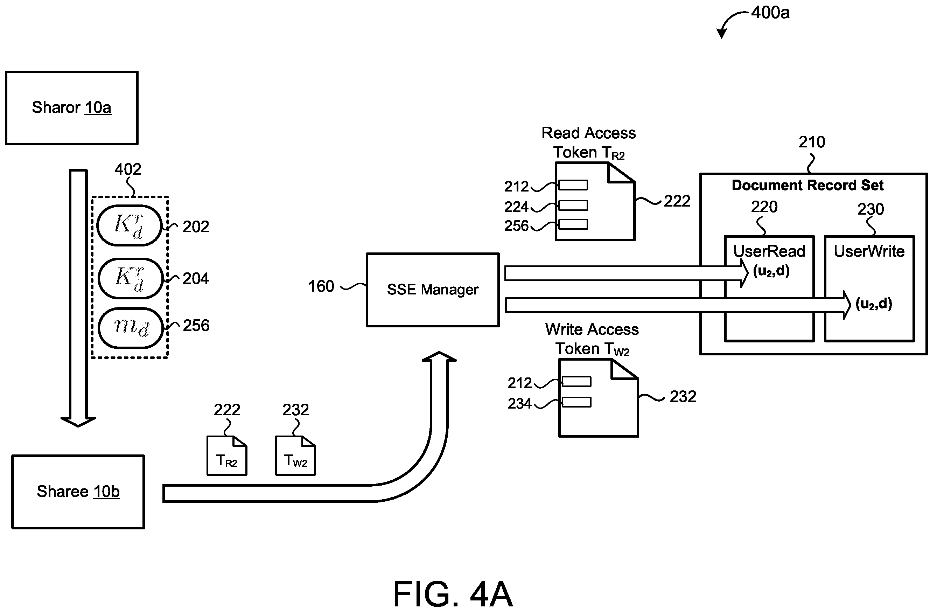

In some implementations, the sharor 10a shares write access to at least one sharee 10n for the document 200 in the data store 150 by sending shared write access permissions 402 (FIG. 4A) to the sharee 10n over the secure and authenticated communication link 120. In the example shown, the shared write access permissions include the read key $K_d^r$ 202, the write key $K_d^w$ 204, and the encrypted metadata $m_d$ 256. In response to receiving the shared write access permissions 402, the sharee 10n computes a corresponding write access token $T_W$ 232 for the sharee 10n and sends the write access token $T_W$ 232 to the SSE manager 160 for input to the user write set 230 at the corresponding location 212 ($u_n$, d). As write access implies read access, the sharee 10n further computes the corresponding read access token $T_R$ 222 for the sharee 10n and sends the read access token $T_R$ 222 to the SSE manager 160 for input to the user read set 220 at the corresponding location 212 ($u_n$, d).

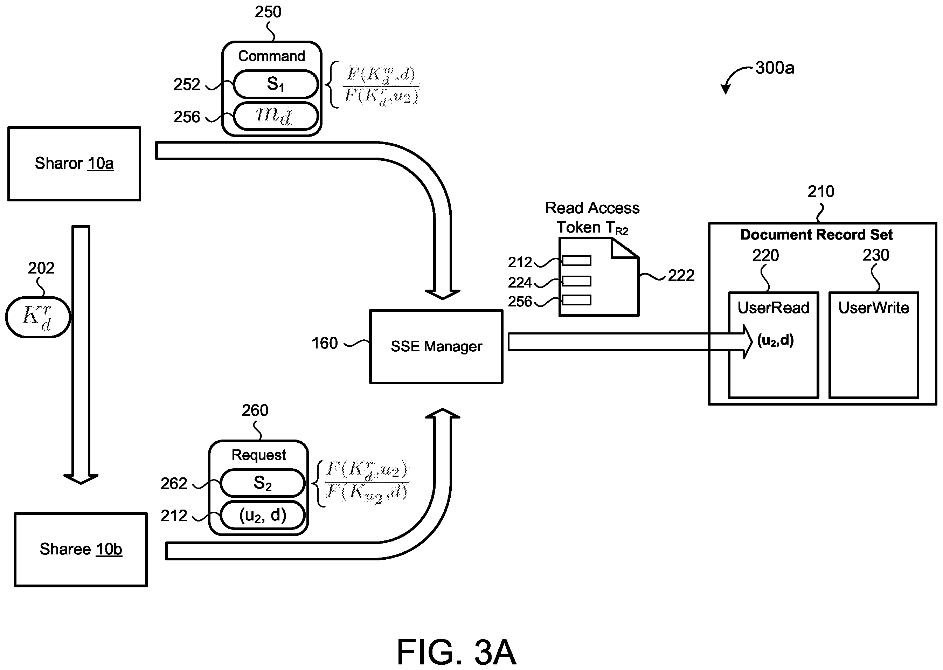

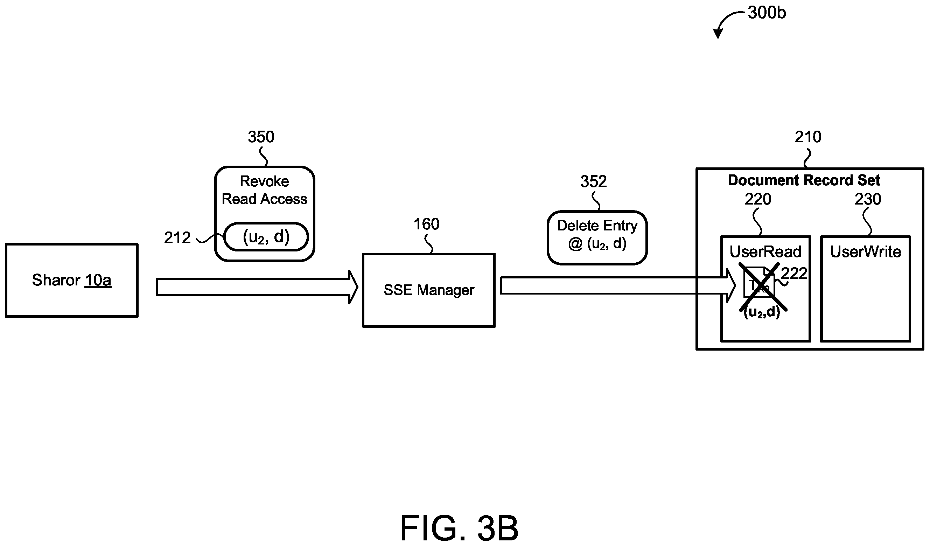

FIGS. 3A and 3B show schematic views 300a, 300b of an example SSE manager 160 authorizing/revoking read access for a document 200 to/from a sharee 10b. Referring to FIG. 3A, the SSE manager 160 receives the shared read access command 250 from the sharor 10a sharing read access to the sharee 10b for the document 200 stored in the data store 150 (e.g., memory hardware). The shared access read command 250 includes the first cryptographic share value $S_1$ 252 and the encrypted metadata $m_d$ 256 associated with the document 200. In the example shown, the first cryptographic share value $S_1$ 252 includes a quotient of a pseudorandom function F of the write key $K_d^w$ 204 and the document identifier d divided by a pseudorandom function F of the read key $K_d^r$ 202 and the user/sharee identifier $u_2$ identifying the sharee 10b. For instance the first cryptographic share value $S_1$ 252 may be calculated as follows.

$$S_1 = \frac{F(K_d^w, d)}{F(K_d^r, u_2)} \quad (3)$$

In response to receiving the read key $K_d^r$ 202 from the sharor 10a, the sharee 10b computes the second cryptographic share value $S_2$ 262 based on the read key $K_d^r$ 202 and a user key $K_{u2}$ 112 associated with the sharee 10b. In the example shown, the second cryptographic share value $S_2$ 262 includes a quotient of a pseudorandom function F of the read key $K_d^r$ 202 and the user identifier $u_2$ identifying the sharee 10b divided by a pseudorandom function F of the user key $K_{u2}$ 112 and the document identifier d identifying the document 200. For instance the second cryptographic share value $S_2$ 262 may be calculated as follows.

$$S_2 = \frac{F(K_d^r, u_2)}{F(K_{u2}, d)} \quad (4)$$

The SSE manager 160 also receives the read access request 260 from the sharee 10b that includes the second cryptographic share value $S_2$ 262 and the location 212 associated with the user identifier $u_2$ and the document identifier d. In some implementations, the SSE manager 160 determines the cryptographic read access value 224 for the sharee 10b based on the first and second cryptographic share values $S_1$, $S_2$ 252, 262 received from the corresponding one of the sharor 10a or the sharee 10b. The cryptographic read access value 224 authorizes read access to the sharee 10b for the document 200. In some examples, the SSE manager 160 determines the cryptographic read access value 224 for the sharee 10b by multiplying the first cryptographic share value $S_1$ 252 and the second cryptographic share value $S_2$ 262. Thereafter, the SSE manager 160 stores/records a read access token $T_{R2}$ 222 for the sharee 10b in the user read set 220 at the location 212 ($u_2$, d). The read access token $T_{R2}$ 222 includes the computed cryptographic read access value 224 and the encrypted metadata $m_d$ 256.

Referring to FIG. 3B, the SSE manager 160 receives a revoke read access command 350 from the sharor 10a revoking read access from the sharee 10b for the document 200 stored in the data store 150. In the example shown, the sharor 10a corresponds to a creator of the document 200 and is the only individual permitted to revoke read access (and also write access) from any sharees 10 having read access permissions. In other configurations, the sharor 10a may correspond to a writer of the document 200 having the ability to share/revoke read access for the document 200 to/from sharees 10. The revoke read access command 350 may identify the location 212 ($u_2$, d) that includes the read access entry (e.g., read access token 222) to be removed from the corresponding sharee 10b in the user read set 220. In response to receiving the revoke read access command 350, the SSE manager 160 may send a revoke read access input 352 (e.g., "Delete Entry") to the data record set 210 to remove the read access token $T_{R2}$ 222 from the user read set 220. Accordingly, with the token $T_{R2}$ 222 removed from the location 212 ($u_2$, d) in the user read set 220, the sharee 10b no longer has read access permissions to the document 200.

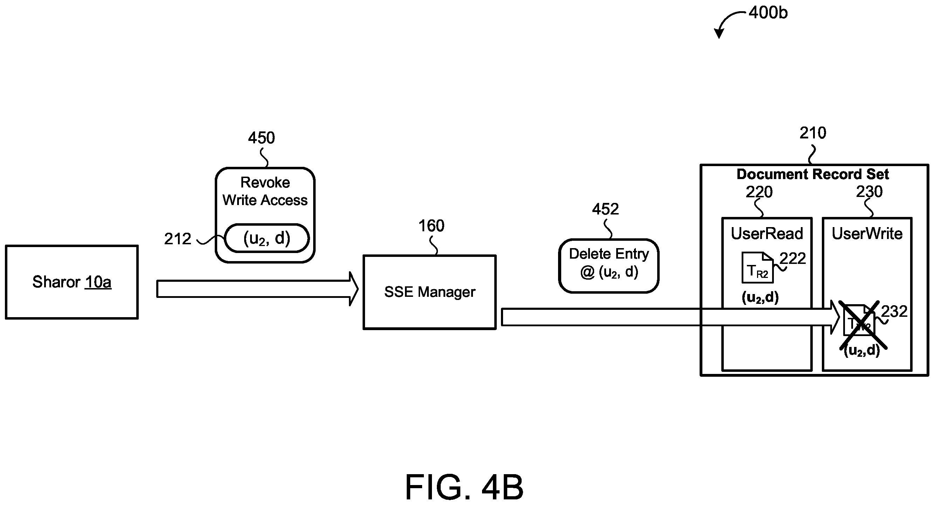

In some examples, the SSE manager 160 also determines whether a corresponding write access token $T_{W2}$ 232 exists for the sharee 10b at the location 212 ($u_2$, d) in the user write set 230, and when the write access token $T_{W2}$ 232 exists, the SSE manager 160 also removes the write access token $T_{W2}$ 232 from the user write set 230. For instance, the SSE manager 160 may send a revoke write access input 452 (FIG. 4B) to the data record set 210 to remove the write access token $T_{R2}$ 222 from the user write set 230.

FIGS. 4A and 4B show schematic views 400a, 400b of an example SSE manager 160 authorizing/revoking write access for a document 200 to/from a sharee 10b. Referring to FIG. 4A, the sharee 10b (i.e., via the user device 110b (FIG. 1)) receives the write access permissions 402 from the sharor 10a sharing write access to the sharee 10b for the document 200 stored in the data store 160. The sharee 10b may receive the write access permissions 402 over the secure and authenticated communication link 120. The shared write access permissions 402 include the read key $K_d^r$ 202, the write key $K_d^w$ 204, and the encrypted metadata $m_d$ 256.

Using the write access permissions 402, the sharee 10b computes both a read access token $T_{R2}$ 222 for the sharee 10b and a write access token $T_{W2}$ 232 for the sharee 10b since having write access permissions also includes read access permissions. For instance, the sharee 10b may compute the cryptographic read access value 224 using Equation 1 and send the read access token $T_{R2}$ 222 including the cryptographic read access value 224 and the encrypted metadata $m_d$ 256 to the SSE manager 160. Similarly, the sharee 10b may compute the cryptographic write access value 234 using Equation 2 and send the write access token $T_{W2}$ 232 including the cryptographic write access value 234 to the SSE manager 160. The sharee 10b may send the tokens 222, 232 to the SSE manager separately or simultaneously.

In the example shown, the SSE manager 160 stores/records the write access token $T_{W2}$ 232 for the sharee 10b in the user write set 230 at the location 212 ($u_2$, d) in response to receiving the write access token $T_{W2}$ 232 from the sharee 10b. Accordingly, the entry of the write access token $T_{W2}$ 232 in the user write set 230 at the location 212 ($u_2$, d) authorizes write access to the sharee 10b for editing (e.g., delete/overwrite/add) the document 200 stored in the data store 160 without providing any private keys to the remote system 140.

SSE manager 160 also stores/records the read access token $T_{R2}$ 222 for the sharee 10b in the user read set 220 at the location 212 ($u_2$, d) in response to receiving the read access token $T_{R2}$ 222 from the sharee 10b. Accordingly, the entry of the read access token $T_{R2}$ 222 in the user read set 220 at the location 212 ($u_2$, d) authorizes read access to the sharee 10b for the document 200 stored in the data store 160 without providing any private keys to the remote system 140.

Referring to FIG. 4B, the SSE manager 160 receives a revoke write access command 450 from the sharor 10a revoking write access from the sharee 10b for the document 200 stored in the data store 150. In the example shown, the sharor 10a corresponds to a creator of the document 200 and is the only individual permitted to revoke write access (and also read access) from any sharees 10 having write access permissions. In other configurations, the sharor 10a may correspond to a writer of the document 200 having the ability to share/revoke write access for the document 200 to/from sharees 10. The revoke write access command 450 may identify the location 212 ($u_2$, d) that includes the write access entry (e.g., write access token 232) to be revoked from the corresponding sharee 10b in the user write set 230. In response to receiving the revoke write access command 450, the SSE manager 160 may send the revoke write access input 452 (e.g., "Delete Entry") to the data record set 210 to remove the write access token $T_{W2}$ 232 from the user write set 230. Accordingly, with the token $T_{W2}$ 232 removed from the location 212 ($u_2$, d) in the user write set 230, the sharee 10b no longer has write access permissions to the document 200. In the example of FIG. 4B, the read access token $T_{R2}$ 222 will remain as a valid entry in the user read set 220 at location 212 ($u_2$, d) unless the SSE manager 160 receives a revoke read access command 350 (FIG. 3B) from the sharor 10b. Document owners 10 may assume the role of the SSE manager 160 for granting/revoking access.

FIGS. 5A and 5B show schematic views 500a, 500b of an example user 10, via the user device 110, sending a search query 550 to the SSE manager 160 for a keyword w in an encrypted document 200 stored in the data store 150. The SSE manager 160 may correspond to an owner of the document in some scenarios. In the example shown, the user 10 has read access to the encrypted document 200 and may correspond to a creator 10a of the document 200 or a sharee 10a having shared read access for the document 200. In the example shown, the search query 550 includes the user identifier u, the document identifier d, and a cryptographic search value $x_d$ 552 based on the read key $K_d^r$ 202 and the user key $K_u$ 112 associated with the user 10. In some implementations, the cryptographic search value $x_d$ 552 includes a generator g to the power of a pseudorandom function F of the read key $K_d^r$ 202 and the keyword w multiplied by a pseudorandom function F of the user key $K_u$ 112 and the document identifier d identifying the document 200. For instance, the cryptographic search value $x_d$ 552 may be calculated as follows.

$$x_d = g^{F(K_d^r, w)F(K_u, d)} \quad (5)$$

In some examples, the generator g corresponds to a group where Diffie-Hellman is hard. The cryptographic search value $x_d$ 552 allows the SSE manager 160 to determine that the user 10 has access to both the cryptographic read key $K_d^r$ 202 and the cryptographic user key $K_u$ 112 without requiring the user 10 to provide either of the keys 112, 202 to the SSE manager 160.

In some implementations, the user 10 sends the search query 550 for the keyword w over a set of documents $U_r(u)$ 200 the user 10 has read access. Accordingly, the user 10 may compute $x_d$, $x_{d1}$,..., xdn using Equation (5) for each corresponding document 200 among the set of documents $U_r(u)$ 200 and include each value of $x_d$, $x_{d1}$,..., xdn and each corresponding document identifier d, $d_1$, ...., $d_n$ in the search query 550 sent to the SSE manager 160. The user device 110 associated with the user 10 may keep track of each document 200 that the user 10 has read access permission and include those documents 200 within the set of documents $U_r(u)$ 200.

In response to receiving the search query 550 from the user 10, the SSE manager 160 queries 560 the document record set 210 to retrieve the read access token $T_R$ 222 for the user 10 from the user read set 220 of the document record set 210 at the location 212 (u, d). The SSE manager 160 may query 560 each document record set 210, 210a-n when the received search query 550 from the user 10 is associated with the set of documents $U_r(u)$ 200. The read access token $T_R$ 222 retrieved by the SSE manager 160 from the user read set 220 includes a corresponding cryptographic read access value $y_d$ 224 and the encrypted metadata $m_d$ 256.

Referring to FIG. 5B, in some implementations, the SSE manager 160 (e.g., data processing hardware) computes a cryptographic word set token $z_d$ based on the cryptographic search value $x_d$ 552 received from the user 10 in the search query 550 and the cryptographic read access value $y_d$ 224 of the read access token $T_R$ 222 retrieved from the user read set 220. For instance, the SSE manager 160 may compute the cryptographic word set token $z_d$ as follows.

$$z_d = x_d^{y^d} \quad (6)$$

Thereafter, the SSE manager 160 determines whether or not the computed cryptographic word set token $z_d$ matches at least one corresponding cryptographic word set token $z_d$ recorded/stored in the word set 240 for the corresponding document 200. Here, the SSE manager 160 is determining whether or not the recently computed token $z_d$ appears in the word set 240 associated with the corresponding document 200. In the example shown, the SSE manager 160 queries 570 the word set 240 using the cryptographic word set token $z_d$. When the query 570 identifies the corresponding cryptographic word set token $z_d$, the SSE manager 160 retrieves the corresponding encrypted word metadata $m_w$ 556 for the word w at the location (w, d) in the word set 240 associated with the matching token $z_d$.

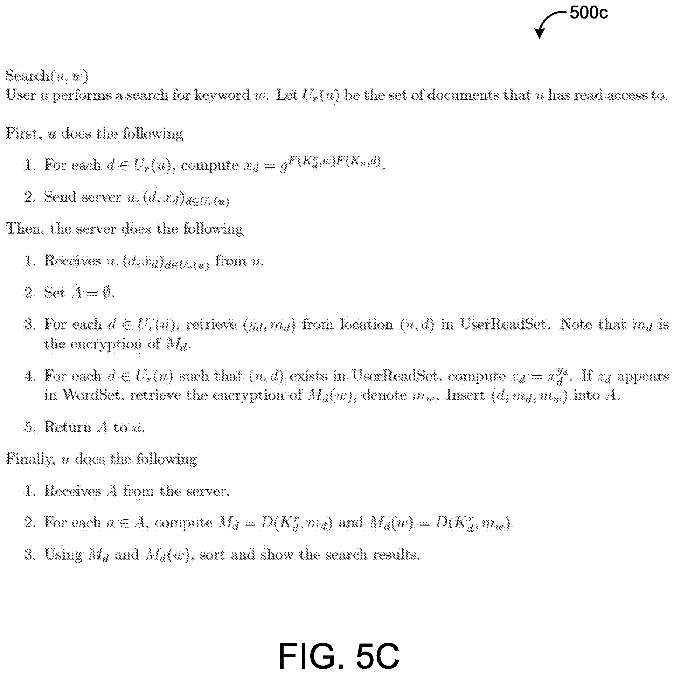

In some implementations, the SSE manager 160 returns a result set 580 including the document identifier d identifying the corresponding document 200, the encrypted metadata $m_d$ 256 for the document 200, and the encrypted word metadata $m_w$ 556. The SSE manager 160 may return a corresponding result set 580 for each document the user 10 has read access to. Using the read key $K_d^r$ 202, the user 10 (i.e., via the user device 110) may decrypt the encrypted metadata $m_d$ 256 to provide the metadata $M_d$ and decrypt the encrypted word metadata to provide the word metadata $M_d(w)$ for the document d associated with the word w. In some examples, the user device 110 uses the metadata $M_d$ and the word metadata $M_d(w)$ for the document d associated with the word w to sort and display search results on a display of the user device 110. For instance, the word metadata $M_d(w)$ may include snippets, rankings, extensions, etc. that may be used to sort the search results on the display of the user device 110. FIG. 5C provides an example algorithm for a user 10 performing a search for a keyword w over a set of documents Ur(u) 200 that the user has read access.

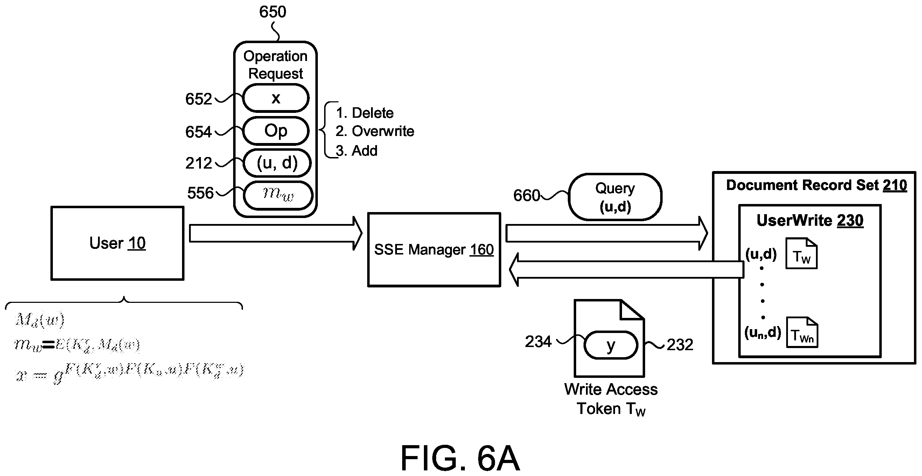

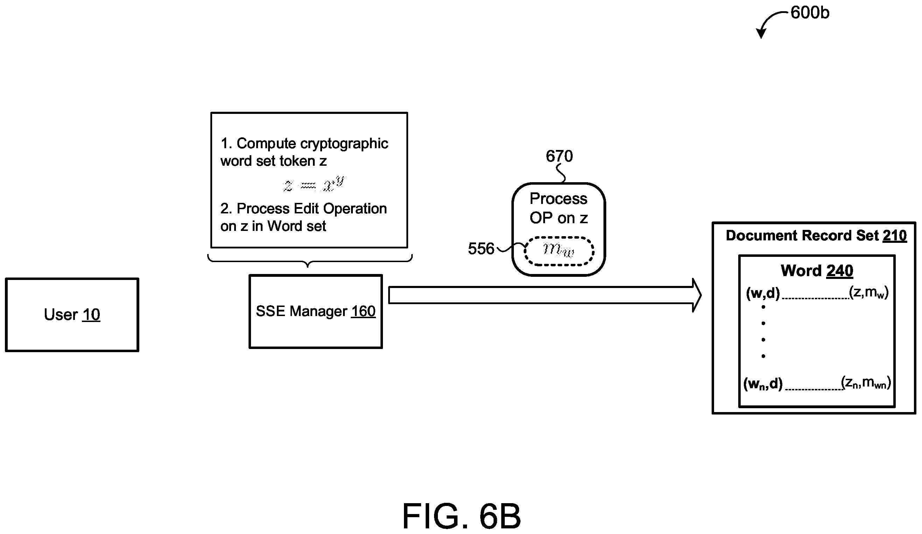

FIGS. 6A and 6B show schematic views 600a, 600b of an example user 10, via the user device 110, sending an edit operation request 650 to the SSE manager 160 to edit a word w within an encrypted document 200 stored in the data store 150. The SSE manager 160 may correspond to an owner of the document in some scenarios. In the example shown, the user 10 has write access permission to the encrypted document 200 and may correspond to a creator 10a of the document 200 or a sharee 10n having shared write access for the document 200. An edit operation 654 requested by the edit operation request 650 may include one of a delete, overwrite, or add operation on the keyword w in the document 200. In the example shown, the user 10 creates word metadata $M_d(w)$ for the document d associated with the word identifier w identifying the word to be edited. The word metadata $M_d(w)$ may include a ranking, extensions, snippets, etc. associated with the word identifier w identifying the word within the document 200 to be edited. The user may encrypt the word metadata $M_d(w)$ using read key $K_d^r$ 202 to provide word metadata $m_w$ 556. In some implementations, the user 10, via the user device 110 computes a cryptographic edit value x 652 based on the read key $K_d^r$ 202, the write key $K_d^w$ 204, and the user key $K_u$ 112 associated with the user 10.

In the example shown, the edit operation request 650 includes the user identifier u, the document identifier d, the edit operation 654, encrypted word metadata $m_w$ 556, and a cryptographic edit value x 652 based on the read key $K_d^r$ 202, the write key $K_d^w$ 204, the user key $K_u$ 112, the word identifier w, and the user identifier u identifying the user 10. In some implementations, the cryptographic edit value x 652 includes a generator g to the power of a pseudorandom function F of the read key $K_d^r$ 202 and the keyword w multiplied by a pseudorandom function F of the user key $K_u$ 112 and the user identifier u multiplied by a pseudorandom function F of the write key $K_d^w$ 204 and the user identifier u. For instance, the cryptographic edit value x 652 may be calculated as follows.

$$x = g^{F(K_d^r, w) F(K_u, u) F(K_d^w, u)} \quad (7)$$

In some examples, the generator g corresponds to a group where Diffie-Hellman is hard. The cryptographic edit value x 652 allows the SSE manager 160 to determine that the user 10 has access to the cryptographic read key $K_d^r$ 202, the cryptographic write key $K_d^w$ 204, and the cryptographic user key $K_u$ 112 without requiring the user 10 to provide any of the keys 112, 202, 204 to the SSE manager 160.

In response to receiving the edit operation request 650 from the user 10, the SSE manager 160 queries 660 the document record set 210 to retrieve the write access token T$_w$ 232 for the user 10 from the user write set 230 at the location 212 (u, d). The write access token T$_W$ 222 retrieved by the SSE manager 160 from the user write set 230 includes a corresponding cryptographic write access value y 234.

Referring to FIG. 6B, in some implementations, the SSE manager 160 (e.g., data processing hardware) computes a cryptographic word set token z based on the cryptographic edit value x 652 received from the user 10 in the edit operation request 650 and the cryptographic write access value y 234 of the write access token T$_W$ 232 retrieved from the user write set 230. For instance, the SSE manager 160 may compute the cryptographic word set token z as follows.

$$z = x^y \quad (7)$$

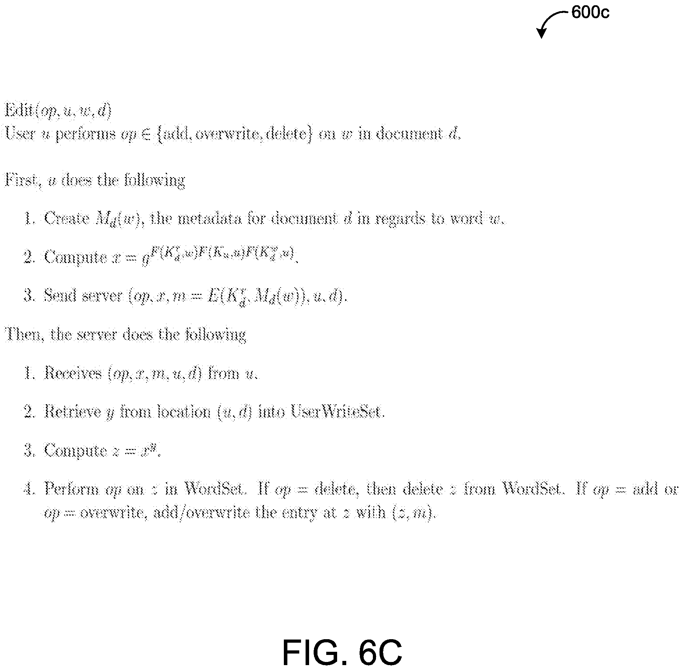

Thereafter, the SSE manager 160 processes 670 the edit operation 654 requested by the edit operation request 650 on a corresponding cryptographic word set token z recorded/stored in the word set 240 for the corresponding document 200. For instance, when the edit operation 654 includes a delete operation, the SSE manager 160 may process the delete operation by deleting/removing the corresponding cryptographic word set token z from the word set 240. In some examples, when the edit operation 654 includes an overwrite operation, the SSE manager 160 processes 670 the overwrite operation by replacing the corresponding cryptographic word set token z in the word set 240 with the computed cryptographic word set token z and the encrypted word metadata m$_d$ 556. In yet another example, when the edit operation 654 includes an add operation (e.g., when z does not exist in the word set 240), the SSE manager 160 processes the add operation by adding the computed cryptographic word set token z and the encrypted word metadata m$_w$ 556 into the word set 240 at the location (w, d). FIG. 6C provides an example algorithm for a user 10 performing a search for a keyword w over a set of documents Ur(u) 200 that the user has read access.

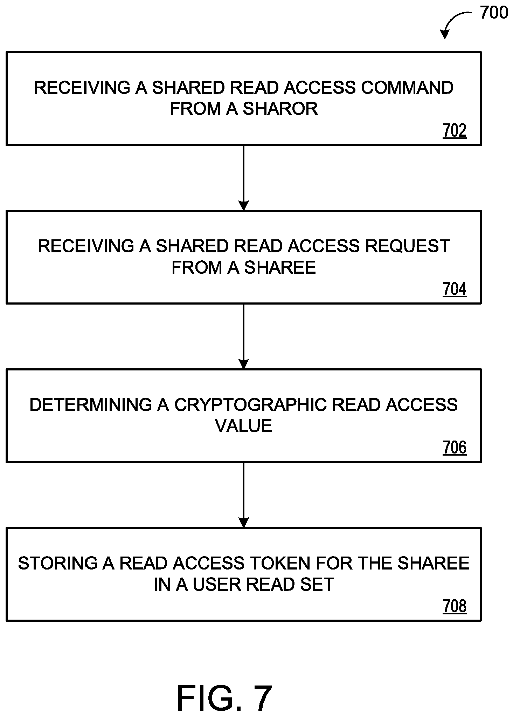

FIG. 7 is a flowchart of an example method 700 of a sharor 10a sharing read access to a sharee 10b for a document 200 stored in a data store 150. The flowchart starts at operation 702 when the SSE manager 160 (e.g., data processing hardware) receives a shared read access command 250 from the sharor 10a. The shared read access command 250 includes first cryptographic share value S$_1$ 252 and the encrypted metadata m$_d$ 256 associated with the document 200. The first cryptographic share value S$_1$ 252 may be based on a write key $K_d^w$ 204 for the document, a read key $K_d^r$ 202, a document identifier d identifying the document, and a sharee identifier u$_2$ identifying the sharee 10b. For instance, the first cryptographic share value S$_1$ 252 may be calculated using Equation (3).

At operation 704, the method 700 includes the SSE manager 160 receiving a shared read access request 260 from the sharee 10b that includes a second cryptographic share value S$_2$ 262 and a location 212 associated with the sharee identifier u$_2$ and the document identifier d. In some examples, the sharee 10b computes the second cryptographic share value S$_2$ 262 based on the read key $K_d^r$ 202 and a user key $K_{u2}$ 112 associated with the sharee 10b. For instance, the second cryptographic share value S$_2$ 262 may be calculated using Equation (4).

At operation 706, the method 700 includes the SSE manager 160 determining a cryptographic read access value 224 for the sharee 10b based on the first cryptographic share value S$_1$ 252 and the second cryptographic share value S$_2$ 262. For instance, the SSE manager 160 may multiply the first cryptographic share value S$_1$ 252 received in the shared read access command 250 from the sharor 10a by the second cryptographic share value S$_2$ 262 received in the shared read access request 260 from the sharee 10b to determine the cryptographic read access value 224 for the sharee 10b. The cryptographic read access value 224 may be used by the SSE manager 160 to authorize read access to the sharee 10b for the document 200 stored in the memory hardware.

At operation 708, the method includes the SSE manager 160 storing a read access token 222 including the cryptographic read access value 224 and the encrypted metadata m$_d$ 256 in a user read set 220 of the memory hardware. The user read set 220 includes a list of sharee identifiers u$_1$-u$_n$ associated with sharees having read access to the document 200.

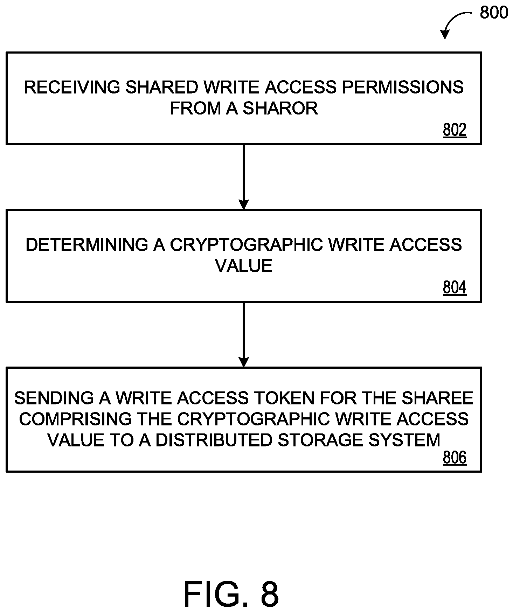

FIG. 8 is a flowchart of an example method 800 of a sharor 10a sharing write access to a sharee 10b for a document 200 stored on a distributed storage system 150. The flowchart starts at operation 802 when a sharee device 110 associated with the sharee 10b receives shared write access permissions 402 from a sharor 10b sharing write access to the sharee 10b for the document stored on the distributed storage system. The write access permissions 402 include a read key $K_d^r$ 202 for the document 200, a write key $K_d^w$ 204 for the document 200, and encrypted metadata $m_d$ 256 for the document 200. The sharee device 110 may receive the write access permissions 402 from the sharor 10a over a secure and authenticated communication channel.

At operation 804, the method 800 includes the sharee device 110 determining a cryptographic write access value 234 based on the write key $K_d^w$ 204, a document identifier d identifying the document 200, a sharee identifier u identifying the sharee 10b, and a sharee cryptographic key $K_U$ 112 associated with the sharee 10b. The cryptographic write access value 234 may be calculated using Equation (2). The cryptographic write access value 234 authorizes write access to the sharee 10b for the document 200.

At operation 804, the method 800 includes sending a write access token 232 for the sharee 10b that includes the cryptographic write access value 234 to the distributed storage system 150. In response to receiving the write access token 232, the distributed storage system 150 is configured to store the write access token in a user write set 230. The user write set 230 includes a list of sharee identifiers associated with sharees 10 having write access to the document 200.

As write access implies read access, the method 800 may further include the sharee device 110 determining a cryptographic read access value 224 based on the write key $K_d^w$ 204, the document identifier d, and the sharee cryptographic key $K_U$ 112. The cryptographic read access value 224 may be calculated using Equation (1). The cryptographic read access value authorizes read access to the sharee 10b for the document 200. The method 800 may further include the sharee device 110 sending a read access token 222 for the sharee 10b to the distributed storage system 150. The read access token 222 may include the cryptographic read access value 224 and the encrypted metadata $m_d$ 256.

A software application (i.e., a software resource) may refer to computer software that causes a computing device to perform a task. In some examples, a software application may be referred to as an "application," an "app," or a "program." Example applications include, but are not limited to, system diagnostic applications, system management applications, system maintenance applications, word processing applications, spreadsheet applications, messaging applications, media streaming applications, social networking applications, and gaming applications.

The non-transitory memory may be physical devices used to store programs (e.g., sequences of instructions) or data (e.g., program state information) on a temporary or permanent basis for use by a computing device. The non-transitory memory may be volatile and/or non-volatile addressable semiconductor memory. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

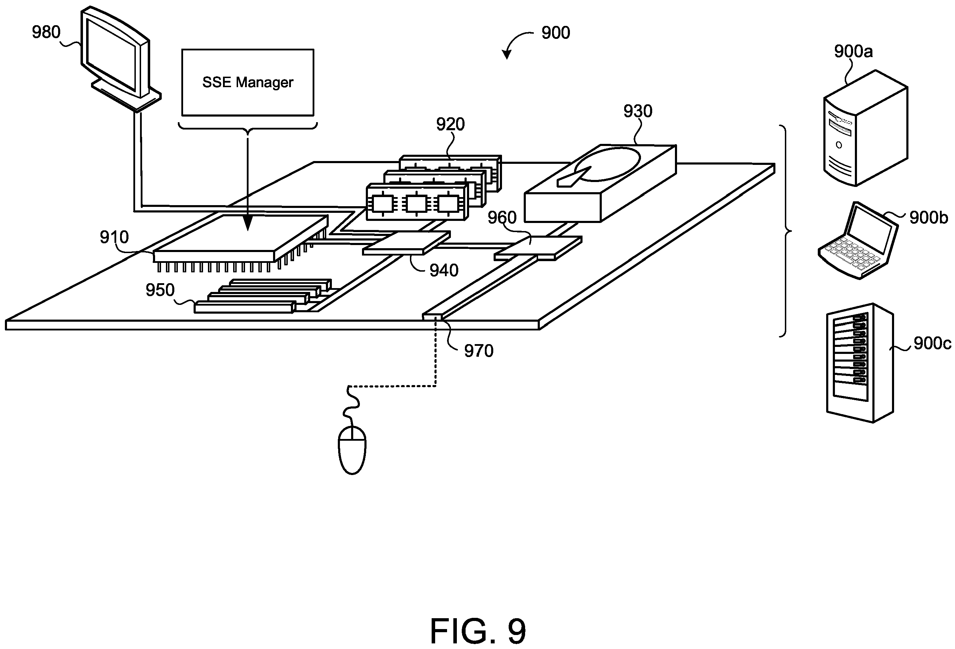

FIG. 9 is schematic view of an example computing device 900 that may be used to implement the systems and methods described in this document. The computing device 900 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document.

The computing device 900 includes a processor 910, memory 920, a storage device 930, a high-speed interface/controller 940 connecting to the memory 920 and high-speed expansion ports 950, and a low speed interface/controller 960 connecting to low speed bus 970 and storage device 930. Each of the components 910, 920, 930, 940, 950, and 960, are interconnected using various busses, and may be mounted on a common motherboard or in other manners as appropriate. The processor 910 can process instructions for execution within the computing device 900, including instructions stored in the memory 920 or on the storage device 930 to display graphical information for a graphical user interface (GUI) on an external input/output device, such as display 980 coupled to high speed interface 940. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 920 stores information non-transitorily within the computing device 900. The memory 920 may be a computer-readable medium, a volatile memory unit(s), or non-volatile memory unit(s). The non-transitory memory 920 may be physical devices used to store programs (e.g., sequences of instructions) or data (e.g., program state information) on a temporary or permanent basis for use by the computing device 900. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 930 is capable of providing mass storage for the computing device 900. In some implementations, the storage device 930 is a computer-readable medium. In various different implementations, the storage device 930 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 920, the storage device 930, or memory on processor 910.

The high speed controller 940 manages bandwidth-intensive operations for the computing device 900, while the low speed controller 960 manages lower bandwidth-intensive operations. Such allocation of duties is exemplary only. In some implementations, the high-speed controller 940 is coupled to the memory 920, the display 980 (e.g., through a graphics processor or accelerator), and to the high-speed expansion ports 950, which may accept various expansion cards (not shown). In some implementations, the low-speed controller 960 is coupled to the storage device 930 and low-speed expansion port 970. The low-speed expansion port 970, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 900a or multiple times in a group of such servers 900a, as a laptop computer 900b, or as part of a rack server system 900c. In some implementations, the computing device 900 implements the SSE manager 160.

Various implementations of the systems and techniques described here can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

Implementations of the subject matter and the functional operations described in this specification can be implemented in digital electronic circuitry, or in computer software, firmware, or hardware, including the structures disclosed in this specification and their structural equivalents, or in combinations of one or more of them. Moreover, subject matter described in this specification can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The terms "data processing apparatus", "computing device" and "computing processor" encompass all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as an application, program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

One or more aspects of the disclosure can be implemented in a computing system that includes a backend component, e.g., as a data server, or that includes a middleware component, e.g., an application server, or that includes a frontend component, e.g., a client computer having a graphical user interface or a Web browser through which a user can interact with an implementation of the subject matter described in this specification, or any combination of one or more such backend, middleware, or frontend components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some implementations, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specifics, these should not be construed as limitations on the scope of the disclosure or of what may be claimed, but rather as descriptions of features specific to particular implementations of the disclosure. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multi-tasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

A number of implementations have been described. Nevertheless, it will be understood that various modifications may be made without departing from the scope of the disclosure. The invention is defined by the appended claims.

**Claims**

1. A method (700) comprising:

   receiving, at data processing hardware (160), a shared read access command (250) from a sharor (10a) sharing read access to a sharee (lOb) for a document (200) stored on memory hardware (150) in communication with the data processing hardware (160), the shared read access command (250) comprising an encrypted value (256) and a first cryptographic share value (252) based on a write key (204) for the document (200), a read key (202) for the document (200), a document identifier (d) identifying the document (200), and a sharee identifier (u2) identifying the sharee (10b);
   receiving, at the data processing hardware (160), a shared read access request (260) from the sharee (10b), the shared read access request (260) comprising the sharee identifier (u2), the document identifier (d), and a second cryptographic share value (262) based on the read key (202) for the document (200) and a sharee cryptographic key (112) associated with the sharee (10b);
   multiplying, by the data processing hardware (160), the first cryptographic share value (252) and the second cryptographic share value (262) to determine a cryptographic read access value (224), the cryptographic read access value (224) authorizing read access to the sharee (lOb) for the document (200); and
   storing, by the data processing hardware (160), a read access token (222) for the sharee (lOb) in a user read set (220) of the memory hardware (150), the read access token (222) comprising the cryptographic read access value (224) and the encrypted value (256), the user read set (220) comprising a list of sharee identifiers (u2) associated with sharees (10b) having read access to the document (200).

2. The method (700) of claim 1, wherein the sharor (10a) is configured to:

   send the read key (202) for the document (200) to the sharee (10b) over a secure and authenticated communication link (120);
   create metadata for the document (200);
   compute the encrypted value (256) by encrypting the metadata for the document (200) using the read key (202); and
   send the shared read access command (250) to the data processing hardware (160);
   wherein the first cryptographic share value (252) is preferably calculated based on a function of the write key (204) and the document identifier (d) divided by a function of the read key (202) and the sharee identifier (u2); and
   wherein the second cryptographic share value (262) is preferably calculated based on a function of the read key (202) and the sharee identifier (u2) divided by a function of the sharee cryptographic key (112) and the document identifier (d).

3. The method (700) of any of claims 1 or 2, further comprising:

   receiving, at the data processing hardware (160), a revoke read access command (350) from the sharor (10a) revoking read access from the sharee (10b) for the document (200) stored on the memory hardware (150); and
   removing, by the data processing hardware (160), the read access token (222) for the sharee (10b) from the user read set (220); and

   the method (700) preferably further comprising:

   in response to receiving the revoke read access command (350), determining, by the data processing hardware (160), whether a corresponding write access token (232) exists for the sharee (10b) in a user write set (230) of the memory hardware (150); and
   when the corresponding write access token (232) exists, removing, by the data processing hardware (160), the write access token (232) from the memory hardware (150).

4. The method (700) of any of claims 1 to 3, further comprising, after storing the read access token (222) for the sharee (10b):

   receiving, at the data processing hardware (160), a search query (550) for a keyword in the document (200) from the sharee (10b), the search query (550) comprising a cryptographic search value (552) based on the read key (202) for the document (200), the keyword, and the sharee cryptographic key (112) associated with the sharee (10b);

retrieving, by the data processing hardware (160), the read access token (222) for the sharee (10b) from the user read set (220) of the memory hardware (150);

computing, by the data processing hardware (160), a cryptographic word set token (z) based on the received cryptographic search value (552) and the retrieved read access token (222) for the sharee (10b);

determining, by the data processing hardware (160), whether the computed cryptographic word set token (z) matches a corresponding cryptographic word set token (z) of a word set (240) stored in the memory hardware (150); and

when the computed cryptographic word set token (z) matches the corresponding cryptographic word set token (z) of the word set (240):

retrieving, by the data processing hardware (160), encrypted word metadata (556) of the document (200) associated with the keyword from the memory hardware (150); and

sending, by the data processing hardware (160), a search result set (580) to the sharee (10b), the search result set (580) comprising the encrypted value (256) and the encrypted word metadata (556); and

wherein the sharee (10b) is preferably configured to:

decrypt the encrypted value (256) using the read key (202); and
decrypt the encrypted word metadata (556) using the read key (202).

5. The method (700) of any of claims 1 to 4, further comprising:

receiving, at the data processing hardware (160), a write access token (232) from the sharee (10b) based on the write key (204) for the document (200), the document identifier (d), the sharee identifier (u2) and the sharee cryptographic key (112); and

storing, by the data processing hardware (160), the write access token (232) in a user write set (230) of the memory hardware (150), the user write set (230) comprising a list of sharee identifiers (u2) associated with sharees (10b) having write access to the document (200),

wherein the sharee (10b) is configured to receive the write key (204) for the document (200) from the sharor (10a) over a secure and authenticated communication link (120); and

the method (700) preferably further comprising:

receiving, at the data processing hardware (160), a revoke write access command (450) from the sharor (10a) revoking write access from the sharee (10b) for the document (200) stored on the memory hardware (150); and

removing, by the data processing hardware (160), the write access token (232) for the sharee (10b) from the user write set (230).

6. A method (800) comprising:

receiving, at a sharee device (110b) associated with a sharee (10b), shared write access permissions (402) from a sharor (10a) sharing write access to the sharee (10b) for a document (200) stored on a distributed storage system (150), the shared write access permissions (402) comprising a read key (202) for the document (200), a write key (204) for the document (200), and encrypted metadata (256) for the document (200);

determining, by the sharee device (110b), a cryptographic write access value (234) based on the write key (204) for the document (200), a document identifier (d) identifying the document (200), a sharee identifier (u2) identifying the sharee (10b), and a sharee cryptographic key (112) associated with the sharee (10b), the cryptographic write access value (234) authorizing write access to the sharee (lOb) for the document (200); and

sending a write access token (232) for the sharee (10b) from the sharee device (110b) to the distributed storage system (150), the write access token (232) comprising the cryptographic write access value (234), the distributed storage system (150) in response to receiving the write access token (232), configured to store the write access token (232) in a user write set (230), the user write set (230) comprising a list of sharee identifiers (u2) associated with sharees (10b) having write access to the document (200).

7. The method (800) of claim 6, wherein the sharor (10a) is configured to revoke write access from the sharee (lOb) for the document (200) stored on the distributed storage system (150) by sending a revoke write access command (450) to the distributed storage system (150), the distributed storage system (150) in response to receiving the revoke write access command (450), configured to remove the write access token (232) for the sharee (10b) from the user write set (230); and

the method (800) preferably further comprising:

determining, by the sharee device (110b), a cryptographic read access value (224) based on the write key (204) for the document (200), the document identifier (d), and the sharee cryptographic key (112), the cryptographic read access value (224) authorizing read access to the sharee (lOb) for the document (200); and

sending a read access token (222) for the sharee (10b) comprising the cryptographic read access value (224) and the encrypted metadata for the document (200) to the distributed storage system (150), the distributed storage system (150), in response to receiving the read access token (222), configured to store the read access token (222) in a user read set (220), the user read set (220) comprising a list of sharee identifiers (u2) associated with sharees (10b) having read access to the document (200);

wherein the sharor (10a) is preferably configured to revoke read access from the sharee (10b) for the document (200) stored on the distributed storage system (150) by sending a revoke read access command (350) to the distributed storage system (150), the distributed storage system (150) in response to receiving the revoke read access command (350), configured to:

remove the write access token (232) for the sharee (10b) from the user write set (230); and
remove the read access token (222) for the sharee (10b) from the user read set (220).

8. The method (800) of any of claims 6 or 7, wherein the sharor (10a) is configured to:

create the metadata for the document (200);
encrypt the metadata for the document (200) using the read key (202); and
send the shared write access permissions (402) to the sharee (10b) over a secure and authenticated communication link (120);
wherein receiving the shared write access permissions (402) from the sharor (10a) comprises receiving the shared write access permissions (402) from the sharor (10a) over a secure and authenticated communication link (120).

9. The method (800) of any of claims 6 to 8, further comprising, after sending the write access token (232) for the sharee (10b) to the distributed storage system (150):

creating, by the sharee device (110b), word metadata for the document (200) associated with a word in the document (200) to be edited;
encrypting, by the sharee device (110b), the word metadata using the read key (202) for the document (200);
computing, by the user device (110), a cryptographic edit value (652) based on the read key (202) for the document (200), a word identifier associated with the word in the document (200) to be edited, the sharee cryptographic key (112) associated with the sharee (10b), the sharee identifier (u2) and the write key (204) for the document (200); and
sending an edit operation request (650) comprising the cryptographic edit value (652), the edit operation request (650) requesting the distributed storage system (150) to process an edit operation (654) on the word in the document (200) to be edited.

10. The method (800) of claim 9, wherein the distributed storage system (150), in response to receiving the edit operation request (650) from the sharee device (110b), is configured to:

retrieve the write access token (232) from the user write set (230);
compute a cryptographic word set token (z) based on the cryptographic edit value (652) and the retrieved write access token (232) for the sharee (10b);
determine whether the edit operation (654) requested by the edit operation request (650) comprises a delete operation; and
when the edit operation (654) requested by the edit operation request (650) comprises a delete operation, process the delete operation by removing a corresponding cryptographic word set token (z) of a word set (240) stored by the distributed storage system (150); or

wherein the distributed storage system (150), in response to receiving the edit operation request (650) from the sharee device (110b), is configured to:

retrieve the write access token (232) from the user write set (230);
compute a cryptographic word set token (z) based on the cryptographic edit value (652) and the retrieved write access token (232) for the sharee (10b);
determine whether the edit operation (650) requested by the edit operation request (650) comprises an overwrite operation; and
when the edit operation (654) requested by the edit operation request (650) comprises an overwrite operation, process the overwrite operation by overwriting a corresponding cryptographic word set token (z) of a word set (240) stored by the distributed storage system (150) with the computed cryptographic word set token (z) and the encrypted word metadata (556); or

wherein the distributed storage system (150), in response to receiving the edit operation request (650) from the sharee device (1 10b), is configured to:

retrieve the write access token (232) from the user write set (230);
compute a cryptographic word set token (z) based on the cryptographic edit value (652) and the retrieved write access token (232) for the sharee (10b);
determine whether the edit operation (654) requested by the edit operation request (650) comprises an add operation; and
when the edit operation (654) requested by the edit operation request (650) comprises an add operation, process the add operation by adding the computed cryptographic word set token (z) and the encrypted word metadata (556) to a word set (240) stored by the distributed storage system (150).

11. A system (100) comprising:

a sharor device (110a) configured to create metadata (206) for a document (200) stored on a storage system (150), encrypt the metadata (206) using a read key (202) for the document (200) and calculate a first cryptographic share value (252) for the document (200), the first cryptographic share value (252) based on a write key (204) for the document (200), the read key (202), a document identifier (d) identifying the document (200), and a sharee identifier (u2) identifying a sharee (10b) to receive shared read access to the document (200);
a sharee device (110b) associated with the sharee (10b) and configured to receive the read key (202) for the document (200) from the sharor device (110a) over a secure and authenticated communication channel (120) and calculate a second cryptographic share value (262) for the document (200), the second cryptographic share value (262) based on based on the read key (202) and a sharee cryptographic key (112) associated with the sharee (10b);
data processing hardware (160) of the storage system (150) in communication with the sharor device (110a) and the sharee device (110b);
memory hardware (150) in communication with the data processing hardware (160), the memory hardware (150) storing instructions that when executed on the data processing hardware (160) cause the data processing hardware (160) to perform operations comprising:

receiving a shared read access command (250) from the sharor device (110a) sharing read access to the sharee (10b) for the document (200), the shared read access command (250) comprising the encrypted metadata (256) for the document (200) and the first cryptographic share value (252);
receiving a shared read access request (260) from the sharee device (110b), the shared read access request (260) comprising the sharee identifier (u2), the document identifier (d), and the second cryptographic share value (262);
determining a cryptographic read access value (224) based on the first cryptographic share value (252) and the second cryptographic share value (262), the cryptographic read access value (224) authorizing read access to the sharee (10b) for the document (200); and
storing a read access token (222) for the sharee (10b) comprising the cryptographic read access value (224) and the encrypted value (256) in a user read set (220) of the memory hardware (150), the user read set (220) comprising a list of sharee identifiers (u2) associated with sharees (10b) having read access to the document (200).

12. The system (100) of claim 11, wherein determining the cryptographic read access value (224) comprises multiplying the first cryptographic share value (252) and the second cryptographic share value (262); and
wherein the operations preferably further comprise:

receiving a revoke read access command (350) from the sharor device (110a) revoking read access from the sharee (10b) for the document (200) stored on the storage system (150); and
removing the read access token (222) for the sharee (10b) from the user read set (220); and

wherein the operations preferably further comprise:

in response to receiving the revoke read access command (350), determining whether a corresponding write access token (232) exists for the sharee (10b) in a user write set (230) of the memory hardware (150); and
when the corresponding write access token (232) exists, removing the write access token (232) from the memory hardware (150).

13. The system (100) of any of claims 11 or 12, wherein the operations further comprise, after storing the read access token (222) for the sharee (10b):

receiving a search query (550) for a keyword in the document (200) from the sharee device (110b), the search query (550) comprising a cryptographic search value (552) based on the read key (202) for the document (200), the keyword, and the sharee cryptographic key (112) associated with the sharee (10b);
retrieving the read access token (222) for the sharee (10b) from the user read set (220) of the memory hardware (150);
computing a cryptographic word set token (z) based on the received cryptographic search value (552) and the retrieved read access token (222) for the sharee (10b);
determining whether the computed cryptographic word set token (z) matches a corresponding cryptographic word set token (z) of a word set (240) stored in the memory hardware (150); and
when the computed cryptographic word set token (z) matches the corresponding cryptographic word set token (z) of the word set (240):

retrieving encrypted word metadata (556) of the document (200) associated with the keyword from the memory hardware (150); and
sending a search result set (580) to the sharee device (110b), the search result set (580) comprising the encrypted metadata (256) and the encrypted word metadata (556); and

wherein the sharee device (110b) is preferably configured to:

decrypt the encrypted metadata (256) using the read key (202); and
decrypt the encrypted word metadata (556) using the read key (202).

14. A system (100) comprising:

a sharor device (110a) associated with a creator (10a) of a document (200) stored on a distributed storage system (150);
a sharee device (110b) associated with a sharee (10b) in communication with the sharor device (110a) over a secure and authenticated communication channel (120), the sharee device (110b) configured to:

receive shared write access permissions (402) from the sharor device (110a) sharing write access for the document (200), the shared write access permissions (402) comprising a read key (202) for the document (200), a write key (204) for the document (200) and encrypted metadata (256) for the document (200);
determine a cryptographic write access value (234) based on the write key (204), a document identifier (d) identifying the document (200), a sharee identifier (u2) identifying the sharee (10b), and a sharee cryptographic key (112) associated with the sharee (10b), the cryptographic write access value (234) authorizing write access to the sharee (10b) for the document (200); and
determine a cryptographic read access value (224) based on the write key (204) for the document (200), the document identifier (d), and the sharee cryptographic key (112);

data processing hardware (160) of the distributed storage system (150) in communication with the sharor device (110a) and the sharee device (110b); and

memory hardware (150) in communication with the data processing hardware (160), the memory hardware (150) storing instructions that when executed on the data processing hardware (160) cause the data processing hardware (160) to perform operations comprising:

receiving a write access token (232) from the sharee device (110b), the write access token (232) comprising the cryptographic write access value (234);
storing the write access token (232) in a user write set (230), the user write set (230) comprising a list of sharee identifiers (u2) associated with sharees (10b) having write access to the document (200);
receiving a read access token (222) for the sharee device (110b) comprising the cryptographic read access value (224) and the encrypted metadata for the document (200) from the sharee device (110b); and
storing the read access token (222) in a user read set (220), the user read set (220) comprising a list of sharee identifiers (u2) associated with sharees (10b) having read access to the document (200).

15. The system (100) of claim 14, wherein the operations further comprise:

receiving a revoke write access command (450) from the sharor device (110a) to revoke write access from the sharee (10b) for the document (200) stored on the distributed storage system (150); and
in response to receiving the revoke write access command (450), removing the write access token (232) for the sharee (10b) from the user write set (230); or

wherein the operations further comprise:

receiving a revoke read access command (350) from the sharor device (110a) to revoke read access from the sharee (10b) for the document (200) stored on the distributed storage system (150); and
in response to receiving the revoke read access command (350):

removing the write access token (232) for the sharee (10b) from the user write set (230); and
removing the read access token (222) for the sharee (10b) from the user read set (220).

**Patentansprüche**

1. Verfahren (700) umfassend:

Empfangen eines gemeinsamen Lesezugriffsbefehls (250) an einer Datenverarbeitungshardware (160) von einem Freigabegeber (10a), der Lesezugriff mit einem Freigabenehmer (10b) für ein Dokument (200) teilt, das auf einer Speicherhardware (150) in Kommunikation mit der Datenverarbeitungshardware (160) gespeichert ist, wobei der Befehl (250) für den gemeinsamen Lesezugriff einen verschlüsselten Wert (256) und einen ersten kryptographischen Freigabewert (252) auf der Grundlage eines Schreibschlüssels (204) für das Dokument (200), eines Leseschlüssels (202) für das Dokument (200), einer Dokumentkennung (d), die das Dokument (200) identifiziert, und einer Freigabenehmerkennung (u2), die den Freigabenehmer (10b) identifiziert, umfasst;
Empfangen, an der Datenverarbeitungshardware (160), einer gemeinsamen Lesezugriffsanforderung (260) von dem Freigabenehmer (10b), wobei die gemeinsame Lesezugriffsanforderung (260) die Freigabenehmerkennung (u2), die Dokumentkennung (d) und einen zweiten kryptographischen Freigabewert (262) basierend auf dem Leseschlüssel (202) für das Dokument (200) und einen dem Freigabenehmer (10b) zugeordneten kryptographischen Freigabenehmerschlüssel (112) umfasst;
Multiplizieren des ersten kryptographischen Freigabewerts (252) und des zweiten kryptographischen Freigabewerts (262) mit der Datenverarbeitungshardware (160), um einen kryptographischen Lesezugriffswert (224) zu bestimmen, wobei der kryptographische Lesezugriffswert (224) den Lesezugriff für den Freigabenehmer (10b) auf das Dokument (200) autorisiert; und
Speichern, durch die Datenverarbeitungshardware (160), eines Lesezugriffstokens (222) für den Freigabenehmer (10b) in einem Benutzerlesesatz (220) der Speicherhardware (150), wobei das Lesezugriffstoken (222) den kryptographischen Lesezugriffswert (224) und den verschlüsselten Wert (256) umfasst, wobei der Benutzerlesesatz (220) eine Liste von Freigabenehmerkennungen (u2) umfasst, die Freigabenehmern (10b) mit Lesezugriff auf das Dokument (200) zugeordnet sind.

2. Verfahren (700) nach Anspruch 1, bei der der Freigabegeber (10a) so konfiguriert ist
den Leseschlüssel (202) für das Dokument (200) über eine sichere und authentifizierte Kommunikationsverbindung (120) an den Freigabenehmer (10b) senden;

Metadaten für das Dokument erstellen (200);

den verschlüsselten Wert (256) durch Verschlüsselung der Metadaten für das Dokument (200) unter Verwendung des Leseschlüssels (202) zu berechnen; und

den Befehl für den gemeinsamen Lesezugriff (250) an die Datenverarbeitungshardware (160) senden; wobei der erste kryptographische Freigabewert (252) vorzugsweise auf der Grundlage einer Funktion des Schreibschlüssels (204) und der Dokumentkennung (d) geteilt durch eine Funktion des Leseschlüssels (202) und der Freigabenehmerkennung (u2) berechnet wird; und

wobei der zweite kryptographische Freigabewert (262) vorzugsweise auf der Grundlage einer Funktion des Leseschlüssels (202) und der Freigabenehmerkennung (u2) geteilt durch eine Funktion des kryptographischen Freigabenehmerschlüssels (112) und der Dokumentkennung (d) berechnet wird.

3.  Verfahren (700) eines der Ansprüche 1 oder 2, weiter umfassend:

    an der Datenverarbeitungshardware (160) einen Befehl zum Widerruf des Lesezugriffs (350) vom Freigabegeber (10a) erhält, der den Lesezugriff vom Freigabenehmer (10b) für das auf der Speicherhardware (150) gespeicherte Dokument (200) widerruft; und

    Entfernen des Lesezugriffstokens (222) für den Freigabenehmer (10b) aus der Benutzer-Lesemenge (220) durch die Datenverarbeitungshardware (160); und

    wobei das Verfahren (700) vorzugsweise weiter umfasst:

    als Reaktion auf den Empfang des Widerrufs-Lesezugriffsbefehls (350), Bestimmen durch die Datenverarbeitungshardware (160), ob ein entsprechendes Schreibzugriffstoken (232) für den Freigabesatz (10b) in einem Benutzerschreibsatz (230) der Speicherhardware (150) existiert; und

    wenn das entsprechende Schreibzugriffstoken (232) vorhanden ist, Entfernen des Schreibzugriffstokens (232) durch die Datenverarbeitungshardware (160) von der Speicherhardware (150).

4.  Das Verfahren (700) eines der Ansprüche 1 bis 3, das ferner nach Speicherung des Lesezugriffstokens (222) für den Freigabenehmer (10b) umfasst:

    Empfangen an der Datenverarbeitungshardware (160) einer Suchanfrage (550) nach einem Schlüsselwort im Dokument (200) von dem Freigabenehmer (10b), wobei die Suchanfrage (550) einen kryptographischen Suchwert (552) umfasst, der auf dem Leseschlüssel (202) für das Dokument (200), dem Schlüsselwort und dem dem Freigabenehmer (10b) zugeordneten kryptographischen Schlüssel (112) basiert;

    Abrufen des Lesezugriffstokens (222) für den Freigabenehmer (10b) von der Datenverarbeitungshardware (160) aus dem Benutzerlesesatz (220) der Speicherhardware (150) durch die Datenverarbeitungshardware (160);

    Berechnen eines kryptographischen Wortmengen-Tokens (z) durch die Datenverarbeitungshardware (160) auf der Grundlage des empfangenen kryptographischen Suchwertes (552) und des abgerufenen Lesezugriffstokens (222) für den Freigabenehmer (10b);

    Bestimmen durch die Datenverarbeitungshardware (160), ob das berechnete kryptographische Wortmengen-Token (z) mit einem entsprechenden kryptographischen Wortmengen-Token (z) einer in der Speicherhardware (150) gespeicherten Wortmenge (240) übereinstimmt; und

    wenn das berechnete kryptographische Wortmengen-Token (z) mit dem entsprechenden kryptographischen Wortmengen-Token (z) der Wortmenge (240) übereinstimmt:

        durch die Datenverarbeitungshardware (160) verschlüsselte Wortmetadaten (556) des Dokuments (200), die dem Schlüsselwort zugeordnet sind, von der Speicherhardware (150) abzurufen; und

        Senden, durch die Datenverarbeitungshardware (160), einer Suchergebnismenge (580) an den Freigabenehmer (10b), wobei die Suchergebnismenge (580) den verschlüsselten Wert (256) und die verschlüsselten Wortmetadaten (556) umfasst; und

    wobei der Freigabenehmer (10b) vorzugsweise so konfiguriert ist:

        den verschlüsselten Wert (256) unter Verwendung des Leseschlüssels (202) entschlüsseln; und

        die verschlüsselten Wortmetadaten (556) mit dem Leseschlüssel (202) entschlüsseln.

**5.** Verfahren (700) nach einem der Ansprüche 1 bis 4, ferner umfassend:

Empfangen, an der Datenverarbeitungshardware (160), eines Schreibzugriffstokens (232) von dem Freigabenehmer (10b) auf der Grundlage des Schreibschlüssels (204) für das Dokument (200), der Dokumentkennung (d), der Freigabenehmerkennung (u2) und des kryptographischen Freigabenehmerschlüssels (112); und Speichern des Schreibzugriffstokens (232) durch die Datenverarbeitungshardware (160) in einem Benutzerschreibsatz (230) der Speicherhardware (150), wobei der Benutzerschreibsatz (230) eine Liste von Freigabenehmerkennungen (u2) umfasst, die Freigabenehmer (10b) mit Schreibzugriff auf das Dokument (200) zugeordnet sind,

wobei der Freigabenehmer (10b) konfiguriert ist, um den Schreibschlüssel (204) für das Dokument (200) von dem Freigabegeber (10a) über eine sichere und authentifizierte Kommunikationsverbindung (120) zu empfangen; und

wobei das Verfahren (700), die vorzugsweise weiter umfasst:

an der Datenverarbeitungshardware (160) einen Befehl (450) zum Widerruf des Schreibzugriffs vom Freigabegeber (10a) erhält, der den Schreibzugriff vom Freigabenehmer (10b) für das auf der Speicherhardware (150) gespeicherte Dokument (200) widerruft; und Entfernen des Schreibzugriffstokens (232) für den Freigabenehmer (10b) durch die Datenverarbeitungshardware (160) aus dem Benutzerschreibsatz (230).

**6.** Verfahren (800), das Folgendes umfasst:

Empfangen von gemeinsamen Schreibzugriffsberechtigungen (402) an einer Freigabenehmer-Vorrichtung (110b), die einem Freigabenehmer (10b) zugeordnet ist, von einem Freigabegeber (10a), der den Schreibzugriff an den Freigabenehmer (10b) für ein in einem verteilten Speichersystem (150) gespeichertes Dokument (200) gemeinsam nutzt, wobei die gemeinsamen Schreibzugriffsberechtigungen (402) einen Leseschlüssel (202) für das Dokument (200), einen Schreibschlüssel (204) für das Dokument (200) und verschlüsselte Metadaten (256) für das Dokument (200) umfassen; Bestimmen, durch die Freigabenehmer-Vorrichtung (110b), eines kryptographischen Schreibzugriffswerts (234) auf der Grundlage des Schreibschlüssels (204) für das Dokument (200), einer Dokumentkennung (d), die das Dokument (200) identifiziert, einer Freigabenehmerkennung (u2), die die Freigabenehmer (10b) identifiziert, und eines kryptographischen Freigabeschlüssels (112), der dem Freigabenehmer (10b) zugeordnet ist, wobei der kryptographische Schreibzugriffswert (234) den Schreibzugriff für die Freigabenehmer (10b) auf das Dokument (200) autorisiert; und Senden eines Schreibzugriffstokens (232) für den Freigabenehmer (10b) von der Freigabenehmer-Vorrichtung (110b) an das verteilte Speichersystem (150), wobei das Schreibzugriffstoken (232) den kryptographischen Schreibzugriffswert (234) umfasst, wobei das verteilte Speichersystem (150) als Reaktion auf den Empfang des Schreibzugriffstokens (232), konfiguriert, um das Schreibzugriffstoken (232) in einem Benutzerschreibsatz (230) zu speichern, wobei der Benutzerschreibsatz (230) eine Liste von Freigabenehmerkennungen (u2) umfasst, die Freigabenehmer (10b) mit Schreibzugriff auf das Dokument (200) zugeordnet sind.

**7.** Verfahren (800) nach Anspruch 6, wobei der Freigabegeber (10a) so konfiguriert ist, dass er den Schreibzugriff von dem Freigabenehmer (10b) für das auf dem verteilten Speichersystem (150) gespeicherte Dokument (200) durch Senden eines Befehls (450) zum Widerruf des Schreibzugriffs an das verteilte Speichersystem (150) widerruft, wobei das verteilte Speichersystem (150) als Reaktion auf den Empfang des Befehls (450) zum Widerruf des Schreibzugriffs so konfiguriert ist, dass es das Schreibzugriffstoken (232) für den Freigabenehmer (10b) aus dem Schreibsatz (230) des Benutzers entfernt; und Wobei das Verfahren (800) vorzugsweise weiter umfasst:

Bestimmen eines kryptographischen Lesezugriffswerts (224) durch die Freigabenehmer-Vorrichtung (110b) auf der Grundlage des Schreibschlüssels (204) für das Dokument (200), der Dokumentkennung (d) und des kryptographischen Freigabenehmerschlüssels (112), wobei der kryptographische Lesezugriffswert (224) den Lesezugriff auf den Freigabenehmer (10b) für das Dokument (200) autorisiert; und Senden eines Lesezugriffstokens (222) für den Freigabenehmer (10b), das den kryptographischen Lesezugriffswert (224) und die verschlüsselten Metadaten für das Dokument (200) umfasst, an das verteilte Speichersystem (150), wobei das verteilte Speichersystem (150) als Reaktion auf den Empfang des Lesezugriffstokens (222) so konfiguriert ist, dass es das Lesezugriffstoken (222) in einem Benutzerlesesatz (220) speichert, wobei der Benutzerlesesatz (220) eine Liste von Freigabenehmerkennungen (u2) umfasst, die Freigabennehmern (10b) mit Lesezugriff auf das Dokument (200) zugeordnet sind;

wobei der Freigabegeber (10a) vorzugsweise so konfiguriert ist, dass er den Lesezugriff von dem Freigabenehmer (10b) für das auf dem verteilten Speichersystem (150) gespeicherte Dokument (200) durch Senden eines Befehls (350) zum Widerruf des Lesezugriffs an das verteilte Speichersystem (150) widerruft, wobei das verteilte Speichersystem (150) als Reaktion auf den Empfang des Befehls (350) zum Widerruf des Lesezugriffs so konfiguriert ist, dass es:

das Schreibzugriffstoken (232) für den Freigabenehmer (10b) aus dem Benutzerschreibsatz (230) entfernen; und

das Lesezugriffstoken (222) für den Freigabenehmer (10b) aus dem Lesesatz (220) des Benutzers entfernen.

8. Verfahren (800) nach einem der Ansprüche 6 oder 7, wobei der Freigabegeber (10a) so konfiguriert ist:

die Metadaten für das Dokument erstellen (200);

die Metadaten für das Dokument (200) mit dem Leseschlüssel (202) verschlüsseln; und

die gemeinsamen Schreibzugriffsberechtigungen (402) über eine sichere und authentifizierte Kommunikationsverbindung (120) an die Freigabenehmer (10b) senden;

wobei das Empfangen der gemeinsamen Schreibzugriffsberechtigungen (402) von dem gemeinsamen Verteiler (10a) das Empfangen der gemeinsamen Schreibzugriffsberechtigungen (402) von dem gemeinsamen Verteiler (10a) über eine sichere und authentifizierte Kommunikationsverbindung (120) umfasst.

9. Verfahren (800) nach einem der Ansprüche 6 bis 8, das ferner nach dem Senden des Schreibzugriffstokens (232) für den Anteil (10b) an das verteilte Speichersystem (150) umfasst:

Erstellen von Wortmetadaten für das Dokument (200), die einem Wort in dem zu bearbeitenden Dokument (200) zugeordnet sind, durch die Freigabenehmer-Vorrichtung (110b);

Verschlüsselung der Wortmetadaten durch die Freigabenehmer-Vorrichtung (110b) unter Verwendung des Leseschlüssels (202) für das Dokument (200);

Berechnen, durch die Benutzervorrichtung (110), eines kryptographischen Editierwertes (652) auf der Grundlage des Leseschlüssels (202) für das Dokument (200), einer dem Wort in dem zu editierenden Dokument (200) zugeordneten Wortkennung, des dem Freigabenehmer (10b) zugeordneten kryptographischen Freigabenehmerschlüssels (112), der Freigabenehmerkennung (u2) und des Schreibschlüssels (204) für das Dokument (200); und

Senden einer Editieroperationsanforderung (650), die den kryptographischen Editierwert (652) umfasst, wobei die Editieroperationsanforderung (650) das verteilte Speichersystem (150) auffordert, eine Editieroperation (654) für das Wort in dem zu editierenden Dokument (200) zu verarbeiten.

10. Verfahren (800) nach Anspruch 9, bei dem das verteilte Speichersystem (150) als Reaktion auf den Empfang der Editieroperationsanforderung (650) von der Freigabenehmer-Vorrichtung (110b) so konfiguriert ist:

das Schreibzugriffstoken (232) aus dem Benutzer-Schreibsatz (230) abrufen;

Berechnen eines kryptographischen Wortmengen-Tokens (z) auf der Grundlage des kryptographischen Editierwerts (652) und des abgerufenen Schreibzugriffstokens (232) für den Freigabenehmer (10b);

zu bestimmen, ob die von der Bearbeitungsoperationsanforderung (650) angeforderte Bearbeitungsoperation (654) eine Löschoperation umfasst; und

wenn der durch die Editieroperationsanforderung (650) angeforderte Editiervorgang (654) einen Löschvorgang umfasst, den Löschvorgang durch Entfernen eines entsprechenden kryptographischen Wortmengen-Tokens (z) einer Wortmenge (240), die durch das verteilte Speichersystem (150) gespeichert ist, zu verarbeiten; oder

wobei das verteilte Speichersystem (150) in Reaktion auf den Empfang der Editieroperationsanforderung (650) von der Freigabenehmer-Vorrichtung (110b) so konfiguriert ist, dass es

das Schreibzugriffstoken (232) aus dem Benutzer-Schreibsatz (230) abrufen;

Berechnen eines kryptographischen Wortmengen-Tokens (z) auf der Grundlage des kryptographischen Editierwerts (652) und des abgerufenen Schreibzugriffstokens (232) für den Freigabenehmer (10b);

zu bestimmen, ob der von der Anfrage (650) für den Bearbeitungsvorgang angeforderte Bearbeitungsvorgang (650) einen Überschreibvorgang umfasst; und

wenn der durch die Editieroperationsanforderung (650) angeforderte Editiervorgang (654) einen Überschreibvorgang umfasst, den Überschreibvorgang durch Überschreiben eines entsprechenden kryptographischen Wortmengen-Tokens (z) einer durch das verteilte Speichersystem (150) gespeicherten Wortmenge (240) mit dem berechneten kryptographischen Wortmengen-Token (z) und den verschlüsselten Wortmetadaten (556) verarbeiten; oder

wobei das verteilte Speichersystem (150) in Reaktion auf den Empfang der Editieroperationsanforderung (650) von der Freigabenehmer-Vorrichtung (110b) so konfiguriert ist, dass es

das Schreibzugriffstoken (232) aus dem Benutzer-Schreibsatz (230) abrufen;
Berechnen eines kryptographischen Wortmengen-Tokens (z) auf der Grundlage des kryptographischen Editierwerts (652) und des abgerufenen Schreibzugriffstokens (232) für den Freigabenehmer (10b);
zu bestimmen, ob die von der Bearbeitungsoperationsanforderung (650) angeforderte Bearbeitungsoperation (654) eine Hinzufügungsoperation umfasst; und
wenn die von der Editieroperationsanforderung (650) angeforderte Editieroperation (654) eine Add-Operation umfasst, die Add-Operation durch Hinzufügen des berechneten kryptographischen Wortmengen-Tokens (z) und der verschlüsselten Wortmetadaten (556) zu einer vom verteilten Speichersystem (150) gespeicherten Wortmenge (240) verarbeiten.

11. System (100) umfassend:

eine Freigabegeber-Vorrichtung (110a), die so konfiguriert ist, dass sie Metadaten (206) für ein in einem Speichersystem (150) gespeichertes Dokument (200) erzeugt, die Metadaten (206) unter Verwendung eines Leseschlüssels (202) für das Dokument (200) verschlüsselt und einen ersten kryptografischen Freigabewert (252) für das Dokument (200) berechnet, der erste kryptographische Freigabewert (252) auf der Grundlage eines Schreibschlüssels (204) für das Dokument (200), des Leseschlüssels (202), einer Dokumentkennung (d), die das Dokument (200) identifiziert, und einer Freigabenehmerkennung (u2), die einen Freigabenehmer (10b) identifiziert, um einen gemeinsamen Lesezugriff auf das Dokument (200) zu empfangen;
eine Freigabenehmer-Vorrichtung (110b), die dem Freigabenehmer (10b) zugeordnet und so konfiguriert ist, dass sie den Leseschlüssel (202) für das Dokument (200) von der Freigabegeber-Vorrichtung (110a) über einen sicheren und authentifizierten Kommunikationskanal (120) empfängt und einen zweiten kryptografischen Freigabewert (262) für das Dokument (200) berechnet, wobei der zweite kryptografische Freigabewert (262) auf der Grundlage des Leseschlüssels (202) und eines dem Freigabenehmer (10b) zugeordneten kryptografischen Freigabenehmerschlüssels (112) basiert;
Datenverarbeitungshardware (160) des Speichersystems (150) in Kommunikation mit der Freigabegeber-Vorrichtung (110a) und der Freigabenehmer-Vorrichtung (110b);
Speicherhardware (150) in Kommunikation mit der Datenverarbeitungshardware (160), wobei die Speicherhardware (150) Befehle speichert, die, wenn sie auf der Datenverarbeitungshardware (160) ausgeführt werden, die Datenverarbeitungshardware (160) veranlassen, Operationen auszuführen, die Folgendes umfassen:

Empfangen eines gemeinsamen Lesezugriffsbefehls (250) von der Freigabegeber-Vorrichtung (110a), die den Lesezugriff für den Freigabenehmer (10b) auf das Dokument (200) gemeinsam nutzt, wobei der gemeinsame Lesezugriffsbefehl (250) die verschlüsselten Metadaten (256) für das Dokument (200) und den ersten kryptographischen Freigabewert (252) umfasst;
Empfangen einer gemeinsamen Lesezugriffsanforderung (260) von der Freigabenehmer-Vorrichtung (110b), wobei die gemeinsame Lesezugriffsanforderung (260) die Freigabenehmerkennung (u2), die Dokumentkennung (d) und den zweiten kryptographischen Freigabewert (262) umfasst;
Bestimmen eines kryptographischen Lesezugriffswertes (224) basierend auf dem ersten kryptographischen Anteilswert (252) und dem zweiten kryptographischen Anteilswert (262), wobei der kryptographische Lesezugriffswert (224) den Lesezugriff auf den Anteil (10b) für das Dokument (200) autorisiert; und
Speichern eines Lesezugriffstokens (222) für den Freigabenehmer (10b), das den kryptographischen Lesezugriffswert (224) und den verschlüsselten Wert (256) in einem Benutzerlesesatz (220) der Speicherhardware (150) umfasst, wobei der Benutzerlesesatz (220) eine Liste von Freigabenehmerkennungen (u2) umfasst, die Freigabennehmern (10b) mit Lesezugriff auf das Dokument (200) zugeordnet sind.

12. System (100) nach Anspruch 11, wobei die Bestimmung des kryptographischen Lesezugriffswertes (224) die Multiplikation des ersten kryptographischen Anteilswertes (252) und des zweiten kryptographischen Anteilswertes (262) umfasst;

wobei die Operationen vorzugsweise weiterhin umfassen:

Empfangen eines Widerrufbefehls (350) für den Lesezugriff von der Freigabegeber-Vorrichtung (110a), der den Lesezugriff von dem Freigabenehmer (10b) für das auf dem Speichersystem (150) gespeicherte Dokument (200) widerruft; und

Entfernen des Lesezugriffstokens (222) für den Freigabenehmer (10b) aus dem Benutzerlesesatz (220); und

wobei die Operationen vorzugsweise weiterhin umfassen:

in Reaktion auf den Empfang des Widerrufs-Lesezugriffbefehls (350), Bestimmen, ob ein entsprechendes Schreibzugriffstoken (232) für den Freigabenehmer (10b) in einem Benutzerschreibsatz (230) der Speicherhardware (150) existiert; und

wenn das entsprechende Schreibzugriffstoken (232) vorhanden ist, Entfernen des Schreibzugriffstokens (232) von der Speicherhardware (150).

13. System (100) nach einem der Ansprüche 11 oder 12, wobei die Operationen nach dem Speichern des Lesezugriffstokens (222) für den Freigabenehmer (10b) ferner umfassen:

Empfangen einer Suchanfrage (550) für ein Schlüsselwort in dem Dokument (200) von der Freigabenehmer-Vorrichtung (110b), wobei die Suchanfrage (550) einen kryptographischen Suchwert (552) auf der Grundlage des Leseschlüssels (202) für das Dokument (200), des Schlüsselworts und des dem Freigabenehmer (10b) zugeordneten kryptographischen Freigabenehmerschlüssels (112) umfasst;

Abrufen des Lesezugriffstokens (222) für den Freigabenehmer (10b) aus dem Benutzerlesesatz (220) der Speicherhardware (150);

Berechnen eines kryptographischen Wortmengen-Tokens (z) auf der Grundlage des empfangenen kryptographischen Suchwerts (552) und des abgerufenen Lesezugriffstokens (222) für den Freigabenehmer (10b);

Bestimmen, ob das berechnete kryptographische Wortmengen-Token (z) mit einem entsprechenden kryptographischen Wortmengen-Token (z) einer Wortmenge (240) übereinstimmt, die in der Speicherhardware (150) gespeichert ist; und

wenn das berechnete kryptographische Wortmengen-Token (z) mit dem entsprechenden kryptographischen Wortmengen-Token (z) der Wortmenge (240) übereinstimmt:

das Abrufen verschlüsselter Wortmetadaten (556) des Dokuments (200), die dem Schlüsselwort zugeordnet sind, von der Speicherhardware (150); und

Senden einer Suchergebnismenge (580) an die Freigabenehmer-Vorrichtung (110b), wobei die Suchergebnismenge (580) die verschlüsselten Metadaten (256) und die verschlüsselten Wortmetadaten (556) umfasst; und

wobei die Freigabenehmer-Vorrichtung (110b) vorzugsweise so konfiguriert ist:

die verschlüsselten Metadaten (256) unter Verwendung des Leseschlüssels (202) entschlüsseln; und
die verschlüsselten Wortmetadaten (556) mit dem Leseschlüssel (202) entschlüsseln.

14. System (100) umfassend:

eine Freigabegeber-Vorrichtung (110a), die mit einem Erzeuger (10a) eines Dokuments (200) verbunden ist, das auf einem verteilten Speichersystem (150) gespeichert ist;

eine Freigabenehmer-Vorrichtung (110b), die einem Freigabenehmer (10b) zugeordnet ist, die über einen sicheren und authentifizierten Kommunikationskanal (120) mit der Freigabegeber-Vorrichtung (110a) kommuniziert, wobei die Freigabenehmer-Vorrichtung (110b) so konfiguriert ist, dass sie:

gemeinsam genutzte Schreibzugriffsberechtigungen (402) von der gemeinsam genutzten Vorrichtung (110a) empfangen, die den Schreibzugriff für das Dokument (200) teilt, wobei die gemeinsam genutzten Schreibzugriffsberechtigungen (402) einen Leseschlüssel (202) für das Dokument (200), einen Schreibschlüssel (204) für das Dokument (200) und verschlüsselte Metadaten (256) für das Dokument (200) umfassen;

Bestimmen eines kryptographischen Schreibzugriffswerts (234) auf der Grundlage des Schreibschlüssels (204), einer Dokumentkennung (d), die das Dokument (200) identifiziert, einer Freigabenehmerkennung (u2), der den Freigabenehmer (10b) identifiziert, und eines dem Freigabenehmer (10b) zugeordneten kryptographischen Freigabenehmerschlüssels (112), wobei der kryptographische Schreibzugriffswert (234) den Schreibzugriff für den Freigabenehmer (10b) auf das Dokument (200) autorisiert; und

einen kryptographischen Lesezugriffswert (224) auf der Grundlage des Schreibschlüssels (204) für das Dokument (200), der Dokumentkennung (d) und des kryptographischen Freigabenehmerschlüssels (112) zu bestimmen;

Datenverarbeitungshardware (160) des verteilten Speichersystems (150) in Kommunikation mit der Freigabegeber-Vorrichtung (110a) und der Freigabenehmer-Vorrichtung (110b); und

Speicherhardware (150) in Kommunikation mit der Datenverarbeitungshardware (160), wobei die Speicherhardware (150) Befehle speichert, die, wenn sie auf der Datenverarbeitungshardware (160) ausgeführt werden, die Datenverarbeitungshardware (160) veranlassen, Operationen auszuführen, die Folgendes umfassen:

Empfangen eines Schreibzugriffstokens (232) von der Freigabenehmer-Vorrichtung (110b), wobei das Schreibzugriffstoken (232) den kryptographischen Schreibzugriffswert (234) umfasst;

Speichern des Schreibzugriffstokens (232) in einem Benutzerschreibsatz (230), wobei der Benutzerschreibsatz (230) eine Liste von Freigabenehmerkennungen (u2) umfasst, die Freigabenehmer (10b) mit Schreibzugriff auf das Dokument (200) zugeordnet sind;

Empfangen eines Lesezugriffstokens (222) für die Freigabenehmer-Vorrichtung (110b) mit dem kryptographischen Lesezugriffswert (224) und den verschlüsselten Metadaten für das Dokument (200) von der Freigabenehmer-Vorrichtung (110b); und

Speichern des Lesezugriffstokens (222) in einem Benutzerlesesatz (220), wobei der Benutzerlesesatz (220) eine Liste von Freigabenehmerkennungen (u2) umfasst, die Freigabennehmern (10b) mit Lesezugriff auf das Dokument (200) zugeordnet sind.

15. System (100) nach Anspruch 14, in dem die Operationen ferner umfassen:

Empfangen eines Befehls (450) zum Widerruf des Schreibzugriffs von der Freigabegeber-Vorrichtung (110a), um den Schreibzugriff von der Freigabenehmer-Vorrichtung (10b) für das auf dem verteilten Speichersystem (150) gespeicherte Dokument (200) zu widerrufen; und

als Reaktion auf Empfangen des Befehls zum Widerruf des Schreibzugriffs (450), Entfernen des Schreibzugriffstokens (232) für den Freigabenehmer (10b) aus dem Benutzerschreibsatz (230); oder

wobei die Operationen weiterhin umfassen:

Empfangen eines Befehls zum Widerruf des Lesezugriffs (350) von der Freigabegeber-Vorrichtung (110a), um den Lesezugriff von der Freigabenehmer-Vorrichtung (10b) für das auf dem verteilten Speichersystem (150) gespeicherte Dokument (200) zu widerrufen; und

als Reaktion auf Empfangen des Befehls zum Widerruf des Lesezugriffs (350):

Entfernen des Schreibzugriffstokens (232) für den Freigabenehmer (10b) aus dem Benutzerschreibsatz (230); und

Entfernen des Lesezugriffstokens (222) für den Freigabenehmer (10b) aus dem Benutzerlesesatz (220).

## Revendications

1. Un procédé (700) comprenant :

le fait de recevoir, au niveau d'un matériel (160) de traitement de données, une commande (250) d'accès en lecture partagée en provenance d'un émetteur de partage (10a) partageant l'accès en lecture à un destinataire de partage (10b) pour un document (200) stocké sur du matériel à mémoire (150) en communication avec le matériel (160) de traitement de données, la commande (250) d'accès en lecture partagée comprenant une valeur cryptée (256) et une première valeur de partage cryptographique (252) basée sur une clé d'écriture (204) pour le document (200), une clé de lecture (202) pour le document (200), un identifiant (d) de document identifiant le document (200) et un identifiant (u2) de destinataire de partage identifiant le destinataire de partage (10b) ;

le fait de recevoir, au niveau du matériel (160) de traitement de données, une demande (260) d'accès en lecture partagée en provenance du destinataire de partage (10b), la demande (260) d'accès en lecture partagée comprenant l'identifiant (u2) du destinataire de partage, l'identifiant du document (d), et une deuxième valeur de partage cryptographique (262) basée sur la clé de lecture (202) pour le document (200) et une clé cryptographique (112) de destinataire de partage associée au destinataire de partage (10b) ;

le fait de multiplier, par le matériel (160) de traitement de données, la première valeur de partage cryptographique (252) et la deuxième valeur de partage cryptographique (262) pour déterminer une valeur cryptographique (224) d'accès en lecture, la valeur cryptographique (224) d'accès en lecture autorisant l'accès en lecture au destinataire de partage (10b) pour le document (200) ; et

le fait de stocker, par le matériel (160) de traitement de données, un jeton (222) d'accès en lecture pour le destinataire de partage (10b) dans un ensemble de lecture (220) utilisateur du matériel à mémoire (150), le jeton (222) d'accès en lecture comprenant la valeur cryptographique (224) d'accès en lecture et la valeur cryptée (256), l'ensemble de lecture (220) utilisateur comprenant une liste d'identifiants (u2) de destinataires de partage associés à des destinataires de partage (10b) ayant un accès en lecture au document (200).

2. Le procédé (700) selon la revendication 1, dans lequel l'émetteur de partage (10a) est configuré pour :

envoyer la clé de lecture (202) pour le document (200) au destinataire de partage (10b) via une liaison de communication (120) sécurisée et authentifiée ;

créer des métadonnées pour le document (200) ;

calculer la valeur cryptée (256) en cryptant les métadonnées pour le document (200) en utilisant la clé de lecture (202) ; et

envoyer la commande (250) d'accès en lecture partagée au matériel (160) de traitement de données ;

la première valeur de partage cryptographique (252) étant de préférence calculée sur la base d'une fonction de la clé d'écriture (204) et de l'identifiant (d) de document divisés par une fonction de la clé de lecture (202) et de l'identifiant (u2) de destinataire de partage ; et

la deuxième valeur de partage cryptographique (262) étant de préférence calculée sur la base d'une fonction de la clé de lecture (202) et de l'identifiant (u2) de destinataire de partage divisés par une fonction de la clé cryptographique (112) de destinataire de partage et de l'identifiant (d) de document.

3. Le procédé (700) selon l'une quelconque des revendications 1 ou 2, comprenant en outre :

le fait de recevoir, au niveau du matériel (160) de traitement de données, une commande (350) de révocation d'accès en lecture en provenance de l'émetteur de partage (10a) révoquant l'accès en lecture par le destinataire de partage (10b) pour le document (200) stocké sur le matériel à mémoire (150) ; et

le fait de supprimer de l'ensemble de lecture (220) utilisateur, par le matériel (160) de traitement de données, le jeton (222) d'accès en lecture pour le destinataire de partage (10b) ; et

le procédé (700) comprenant en outre de préférence :

en réponse à la réception de la commande (350) de révocation d'accès en lecture, le fait de déterminer, par le matériel (160) de traitement de données, s'il existe un jeton (232) d'accès en écriture correspondant pour le destinataire de partage (10b) dans un ensemble d'écriture (230) utilisateur du matériel à mémoire (150) ; et

lorsque le jeton (232) d'accès en écriture correspondant existe, le fait de supprimer du matériel à mémoire (150), par le matériel (160) de traitement de données, le jeton (232) d'accès en écriture.

4. Le procédé (700) selon l'une quelconque des revendications 1 à 3, comprenant en outre, après stockage du jeton (222) d'accès en lecture pour le destinataire de partage (10b) :

le fait de recevoir, au niveau du matériel (160) de traitement de données, une requête de recherche (550) d'un mot-clé dans le document (200) en provenance du destinataire de partage (10b), la requête de recherche (550) comprenant une valeur de recherche cryptographique (552) basée sur la clé de lecture (202) pour le document (200), le mot-clé et la clé cryptographique (112) de destinataire de partage associée au destinataire de partage (10b) ;

le fait de récupérer, par le matériel (160) de traitement de données, le jeton (222) d'accès en lecture pour le destinataire de partage (10b) à partir de l'ensemble de lecture (220) utilisateur du matériel à mémoire (150) ;

le fait de calculer, par le matériel (160) de traitement de données, un jeton cryptographique (z) d'ensemble de mots sur la base de la valeur de recherche cryptographique (552) reçue et du jeton (222) d'accès en lecture récupéré pour le destinataire de partage (10b) ;

le fait de déterminer, par le matériel (160) de traitement de données, si le jeton cryptographique (z) d'ensemble de mots calculé concorde avec un jeton cryptographique (z) d'ensemble de mots correspondant d'un ensemble de mots (240) stocké dans le matériel à mémoire (150) ; et

lorsque le jeton cryptographique (z) d'ensemble de mots calculé concorde avec le jeton cryptographique (z) d'ensemble de mots correspondant de l'ensemble de mots (240) :

le fait de récupérer, par le matériel (160) de traitement de données, des métadonnées de mots (556) cryptées du document (200) associées au mot-clé provenant du matériel à mémoire (150) ; et
le fait d'envoyer, par le matériel (160) de traitement de données, un ensemble (580) de résultats de recherche au destinataire de partage (10b), l'ensemble (580) de résultats de recherche comprenant la valeur cryptée (256) et les métadonnées de mot cryptées (556) ; et

le destinataire de partage (10b) étant de préférence configuré pour :

décrypter la valeur cryptée (256) en utilisant la clé de lecture (202) ; et
décrypter les métadonnées de mot (556) cryptées en utilisant la clé de lecture (202).

5.  Le procédé (700) selon l'une quelconque des revendications 1 à 4, comprenant en outre :

le fait de recevoir, au niveau du matériel (160) de traitement de données, un jeton (232) d'accès en écriture en provenance du destinataire de partage (10b) basé sur la clé d'écriture (204) pour le document (200), l'identifiant (d) de document, le l'identifiant (u2) de destinataire de partage et la clé cryptographique (112) de destinataire de partage ; et
le fait de stocker, par le matériel (160) de traitement de données, le jeton (232) d'accès en écriture dans un ensemble d'écriture (230) utilisateur du matériel à mémoire (150), l'ensemble d'écriture (230) utilisateur comprenant une liste d'identifiants (u2) de destinataires de partage associés à des destinataires de partage (10b) ayant un accès en écriture au document (200),
le destinataire de partage (10b) étant configuré pour recevoir la clé d'écriture (204) pour le document (200) en provenance de l'émetteur de partage (10a) sur une liaison de communication (120) sécurisée et authentifiée ; et
le procédé (700) comprenant en outre de préférence :

le fait de recevoir, au niveau du matériel (160) de traitement de données, une commande (450) de révocation d'accès en écriture en provenance de l'émetteur de partage (10a) révoquant l'accès en écriture par le destinataire de partage (10b) pour le document (200) stocké sur le matériel à mémoire (150) ; et
le fait de supprimer de l'ensemble d'écriture (230) utilisateur, par le matériel (160) de traitement de données, le jeton (232) d'accès en écriture pour le destinataire de partage (10b).

6.  Un procédé (800) comprenant :

le fait de recevoir, sur un dispositif (110b) destinataire de partage associé à un destinataire de partage (10b), des autorisations (402) d'accès en écriture partagée en provenance d'un émetteur de partage (10a) partageant un accès en écriture avec le destinataire de partage (10b) pour un document (200) stocké sur un système (150) de stockage distribué, les autorisations (402) d'accès en écriture partagée comprenant une clé de lecture (202) pour le document (200), une clé d'écriture (204) pour le document (200) et des métadonnées cryptées (256) pour le document (200) ;
le fait de déterminer, par le dispositif (110b) destinataire de partage, une valeur cryptographique (234) d'accès en écriture basé sur la clé d'écriture (204) pour le document (200), un identifiant (d) de document identifiant le document (200), un identifiant (u2) de destinataire de partage identifiant le destinataire de partage (10b), et une clé cryptographique (112) de destinataire de partage associée au destinataire de partage (10b), la valeur cryptographique (234) d'accès en écriture autorisant l'accès en écriture au destinataire de partage (10b) pour le document (200) ; et
le fait d'envoyer un jeton (232) d'accès en écriture pour le destinataire de partage (10b), depuis le dispositif (110b) destinataire de partage vers le système (150) de stockage distribué, le jeton (232) d'accès en écriture comprenant la valeur cryptographique (234) d'accès en écriture, le système (150) de stockage distribué, en réponse à la réception du jeton (232) d'accès en écriture, étant configuré pour stocker le jeton (232) d'accès en écriture dans un ensemble d'écriture (230) utilisateur, l'ensemble d'écriture (230) utilisateur comprenant une liste d'identifiants (u2) de destinataire de partage associés à des destinataires de partage (10b) ayant un accès en écriture au document (200).

**7.** Le procédé (800) selon la revendication 6, dans lequel l'émetteur de partage (10a) est configuré pour révoquer l'accès en écriture par le destinataire de partage (10b) pour le document (200) stocké sur le système (150) de stockage distribué en envoyant une commande (450) de révocation d'accès en écriture au système (150) de stockage distribué, le système (150) de stockage distribué, en réponse à la réception de la commande (450) de révocation d'accès en écriture, étant configuré pour supprimer de l'ensemble d'écriture (230) utilisateur le jeton (232) d'accès en écriture pour le destinataire de partage (10b) ; et

le procédé (800) comprenant de préférence en outre :

le fait de déterminer, par le dispositif (110b) destinataire de partage, une valeur cryptographique (224) d'accès en lecture basée sur la clé d'écriture (204) pour le document (200), l'identifiant (d) de document, et la clé cryptographique (112) de destinataire de partage, la valeur cryptographique (224) d'accès en lecture autorisant l'accès en lecture au destinataire de partage (10b) pour le document (200) ; et

le fait d'envoyer au système (150) de stockage distribué un jeton (222) d'accès en lecture pour le destinataire de partage (10b) comprenant la valeur cryptographique (224) d'accès en lecture et les métadonnées cryptées pour le document (200), le système (150) de stockage distribué, en réponse à la réception du jeton (222) d'accès en lecture, étant configuré pour stocker le jeton (222) d'accès en lecture dans un ensemble de lecture (220) utilisateur, l'ensemble de lecture (220) utilisateur comprenant une liste d'identifiants (u2) de destinataires de partage associés à des destinataires de partage (10b) ayant un accès en lecture au document (200) ;

l'émetteur de partage (10a) étant de préférence configuré pour révoquer l'accès en lecture par le destinataire de partage (10b) pour le document (200) stocké sur le système (150) de stockage distribué en envoyant une commande (350) de révocation d'accès en lecture au système (150) de stockage distribué, le système (150) de stockage distribué, en réponse à la réception de la commande (350) de révocation d'accès en lecture, étant configuré pour :

retirer de l'ensemble d'écriture (230) utilisateur le jeton (232) d'accès en écriture par le destinataire de partage (10b) ; et

retirer de l'ensemble de lecture (220) utilisateur le jeton (222) d'accès en lecture par le destinataire de partage (10b).

**8.** Le procédé (800) selon l'une quelconque des revendications 6 ou 7, dans lequel l'émetteur de partage (10a) est configuré pour :

créer les métadonnées pour le document (200) ;

crypter les métadonnées pour le document (200) en utilisant la clé de lecture (202) ; et

envoyer les autorisations (402) d'accès en écriture partagée au destinataire de partage (10b) via une liaison de communication sécurisée et authentifiée (120) ;

la réception des autorisations (402) d'accès en écriture partagée en provenance de l'émetteur de partage (10a) comprenant le fait de recevoir les autorisations (402) d'accès en écriture partagée en provenance de l'émetteur de partage (10a) sur une liaison de communication (120) sécurisée et authentifiée.

**9.** Le procédé (800) selon l'une quelconque des revendications 6 à 8, comprenant en outre, après l'envoi du jeton (232) d'accès en écriture pour le destinataire de partage (10b) au système (150) de stockage distribué :

le fait de créer, par le dispositif (110b) destinataire de partage, des métadonnées de mot pour le document (200) associées à un mot présent dans le document (200) à éditer ;

le fait de crypter, par le dispositif (110b) destinataire de partage, les métadonnées de mot à l'aide de la clé de lecture (202) pour le document (200) ;

le fait de calculer, par le dispositif utilisateur (110), une valeur d'édition cryptographique (652) basée sur la clé de lecture (202) pour le document (200), un identifiant de mot associé au mot présent dans le document (200) à éditer, la clé cryptographique (112) de destinataire de partage associée au destinataire de partage (10b), l'identifiant (u2) de destinataire de partage et la clé d'écriture (204) pour le document (200) ; et

le fait d'envoyer une demande d'opération d'édition (650) comprenant la valeur d'édition cryptographique (652), la demande d'opération d'édition (650) demandant au système (150) de stockage distribué de traiter une opération d'édition (654) sur le mot présent dans le document (200) à éditer.

**10.** Le procédé (800) selon la revendication 9, dans lequel le système (150) de stockage distribué, en réponse à la réception de la demande d'opération d'édition (650) provenant du dispositif (110b) destinataire de partage, est configuré pour :

récupérer le jeton (232) d'accès en écriture depuis l'ensemble d'écriture (230) utilisateur ;

calculer un jeton cryptographique (z) d'ensemble de mots sur la base de la valeur d'édition cryptographique (652) et du jeton d'accès en écriture (232) récupéré pour le destinataire de partage (10b) ;

déterminer si l'opération d'édition (654) demandée par la demande d'opération d'édition (650) comprend une opération de suppression ; et

lorsque l'opération d'édition (654) demandée par la demande d'opération d'édition (650) comprend une opération de suppression, traiter l'opération de suppression en supprimant un jeton cryptographique (z) d'ensemble de mots correspondant d'un ensemble de mots (240) stocké par le système (150) de stockage distribué ; ou

le système (150) de stockage distribué, en réponse à la réception de la demande d'opération d'édition (650) provenant du dispositif (110b) destinataire de partage, étant configuré pour :

récupérer le jeton (232) d'accès en écriture depuis l'ensemble d'écriture (230) utilisateur ;

calculer un jeton cryptographique (z) d'ensemble de mots sur la base de la valeur d'édition cryptographique (652) et du jeton (232) d'accès en écriture récupéré pour le destinataire de partage (10b) ;

déterminer si l'opération d'édition (650) demandée par la demande d'opération d'édition (650) comprend une opération de réécriture ; et

lorsque l'opération d'édition (654) demandée par la demande d'opération d'édition (650) comprend une opération de réécriture, traiter l'opération de réécriture en écrasant un jeton cryptographique (z) d'ensemble de mots correspondant d'un ensemble de mots (240) stocké par le système (150) de stockage distribué avec le jeton cryptographique (z) d'ensemble de mots calculé et les métadonnées de mot cryptées (556) ; ou

le système (150) de stockage distribué, en réponse à la réception de la demande d'opération d'édition (650) provenant du dispositif (110b) destinataire de partage, étant configuré pour :

récupérer le jeton (232) d'accès en écriture depuis l'ensemble d'écriture (230) utilisateur ;

calculer un jeton cryptographique (z) d'ensemble de mots sur la base de la valeur d'édition cryptographique (652) et du jeton (232) d'accès en écriture récupéré pour le destinataire de partage (10b) ;

déterminer si l'opération d'édition (654) demandée par la demande d'opération d'édition (650) comprend une opération d'ajout ; et

lorsque l'opération d'édition (654) demandée par la demande d'opération d'édition (650) comprend une opération d'ajout, traiter l'opération d'ajout en ajoutant le jeton cryptographique (z) d'ensemble de mots calculé et les métadonnées de mot cryptées (556) à un ensemble de mots (240) stocké par le système (150) de stockage distribué.

11. Un système (100) comprenant :

un dispositif (110a) émetteur de partage configuré pour créer des métadonnées (206) pour un document (200) stocké sur un système de stockage (150), crypter les métadonnées (206) à l'aide d'une clé de lecture (202) pour le document (200) et calculer un première valeur de partage cryptographique (252) pour le document (200), la première valeur de partage cryptographique (252) basée sur une clé d'écriture (204) pour le document (200), la clé de lecture (202), un identifiant (d) de document identifiant le document (200), et un identifiant (u2) de destinataire de partage identifiant un destinataire de partage (10b) pour recevoir un accès au document (200) partagé en lecture ;

un dispositif destinataire de partage (110b) associé au destinataire de partage (10b) et configuré pour recevoir la clé de lecture (202) pour le document (200) en provenance du dispositif (110a) émetteur de partage sur un canal de communication (120) sécurisé et authentifié et calculer une deuxième valeur de partage cryptographique (262) pour le document (200), la deuxième valeur de partage cryptographique (262) basé sur la clé de lecture (202) et une clé cryptographique (112) de destinataire de partage associée au destinataire de partage (10b) ;

un matériel (160) de traitement de données du système de stockage (150) en communication avec le dispositif (110a) émetteur de partage et le dispositif destinataire de partage (110b) ;

un matériel à mémoire (150) en communication avec le matériel (160) de traitement de données, le matériel à mémoire (150) stockant des instructions qui, lorsqu'elles sont exécutées sur le matériel (160) de traitement de données, amènent le matériel (160) de traitement de données à effectuer des opérations comprenant :

le fait de recevoir une commande (250) d'accès en lecture partagée en provenance du dispositif (110a) émetteur de partage partageant un accès en lecture au destinataire de partage (10b) pour le document (200), la commande (250) d'accès en lecture partagée comprenant les métadonnées cryptées (256) pour le document (200) et la première valeur de partage cryptographique (252) ;

le fait de recevoir une demande (260) d'accès en lecture partagée en provenance du dispositif (110b) destinataire de partage, la demande (260) d'accès en lecture partagée comprenant l'identifiant (u2) de destinataire de partage, l'identifiant (d) de document et la deuxième valeur de partage cryptographique (262) ;

le fait de déterminer une valeur cryptographique (224) d'accès en lecture sur la base de la première valeur de partage cryptographique (252) et de la deuxième valeur de partage cryptographique (262), la valeur cryptographique (224) d'accès en lecture autorisant l'accès en lecture au destinataire de partage (10b) pour le document (200) ; et

le fait de stocker un jeton (222) d'accès en lecture pour le destinataire de partage (10b) comprenant la valeur cryptographique (224) d'accès en lecture et la valeur cryptée (256) dans un ensemble de lecture (220) utilisateur du matériel à mémoire (150), l'ensemble de lecture (220) utilisateur comprenant une liste d'identifiants (u2) de destinataires de partage associés à des destinataires de partage (10b) ayant un accès en lecture au document (200).

12. Le système (100) selon la revendication 11, dans lequel la détermination de la valeur cryptographique (224) d'accès en lecture comprend le fait de multiplier la première valeur de partage cryptographique (252) et de la deuxième valeur de partage cryptographique (262) ; et

les opérations comprenant en outre, de préférence :

le fait de recevoir une commande (350) de révocation d'accès en lecture en provenance du dispositif (110a) émetteur de partage révoquant l'accès en lecture par le destinataire de partage (10b) pour le document (200) stocké sur le système de stockage (150) ; et

le fait de retirer le jeton (222) d'accès en lecture pour le destinataire de partage (10b) de l'ensemble de lecture (220) utilisateur ; et

les opérations comprenant de préférence en outre :

en réponse à la réception de la commande (350) de révocation d'accès en lecture, le fait de déterminer s'il existe un jeton (232) d'accès en écriture correspondant pour le destinataire de partage (10b) dans un ensemble d'écriture (230) utilisateur du matériel à mémoire (150) ; et

lorsque le jeton (232) d'accès en écriture correspondant existe, le fait de retirer le jeton (232) d'accès en écriture du matériel à mémoire (150).

13. Le système (100) selon l'une quelconque des revendications 11 ou 12, dans lequel les opérations comprennent en outre, après la mémorisation du jeton (222) d'accès en lecture pour le destinataire de partage (10b) :

le fait de recevoir une requête de recherche (550) pour un mot-clé dans le document (200) en provenance du dispositif (110b) destinataire de partage, la requête de recherche (550) comprenant une valeur de recherche cryptographique (552) basée sur la clé de lecture (202) pour le document (200), le mot-clé et la clé cryptographique (112) de destinataire de partage associée au destinataire de partage (10b) ;

le fait de récupérer le jeton (222) d'accès en lecture pour le destinataire de partage (10b) depuis l'ensemble de lecture (220) utilisateur du matériel à mémoire (150) ;

le fait de calculer un jeton cryptographique (z) d'ensemble de mots sur la base de la valeur de recherche cryptographique (552) reçue et du jeton d'accès en lecture (222) récupéré pour le destinataire de partage (10b) ;

le fait de déterminer si le jeton cryptographique (z) d'ensemble de mots calculé concorde avec un jeton cryptographique (z) d'ensemble de mots correspondant d'un ensemble de mots (240) stocké dans le matériel à mémoire (150) ; et

lorsque le jeton cryptographique (z) d'ensemble de mots calculé concorde avec le jeton cryptographique (z) d'ensemble de mots correspondant de l'ensemble de mots (240) :

le fait de récupérer les métadonnées de mot cryptées (556) du document (200) associées au mot-clé depuis le matériel à mémoire (150) ; et

le fait d'envoyer un ensemble (580) de résultats de recherche au dispositif (110b) destinataire de partage, l'ensemble (580) de résultats de recherche comprenant les métadonnées cryptées (256) et les métadonnées de mot cryptées (556) ; et

le dispositif (110b) destinataire de partage étant de préférence configuré pour :

décrypter les métadonnées cryptées (256) en utilisant la clé de lecture (202) ; et

décrypter les métadonnées de mot cryptées (556) en utilisant la clé de lecture (202).

**14.** Un système (100) comprenant :

un dispositif (110a) émetteur de partage associé à un créateur (10a) d'un document (200) stocké sur un système (150) de stockage distribué ;

un dispositif (110b) destinataire de partage associé à un destinataire de partage (10b) en communication avec le dispositif (110a) émetteur de partage sur un canal de communication (120) sécurisé et authentifié, le dispositif (110b) destinataire de partage étant configuré pour :

recevoir des autorisations (402) d'accès en écriture partagée en provenance du dispositif (110a) émetteur de partage partageant un accès en écriture pour le document (200), les autorisations (402) d'accès en écriture partagée comprenant une clé de lecture (202) pour le document (200), une clé d'écriture (204) pour le document (200) et des métadonnées cryptées (256) pour le document (200) ;

déterminer une valeur cryptographique (234) d'accès en écriture basé sur la clé d'écriture (204), un identifiant (d) de document identifiant le document (200), un identifiant (u2) de destinataire de partage identifiant le destinataire de partage (10b) et une clé cryptographique (112) de destinataire de partage associée au destinataire de partage (10b), la valeur cryptographique (234) d'accès en écriture autorisant l'accès en écriture au destinataire de partage (10b) pour le document (200) ; et

déterminer une valeur cryptographique (224) d'accès en lecture basée sur la clé d'écriture (204) pour le document (200), l'identifiant (d) de document et la clé cryptographique (112) de destinataire de partage ;

un matériel (160) de traitement de données du système (150) de stockage distribué en communication avec le dispositif (110a) émetteur de partage et le dispositif destinataire de partage (110b) ; et

un matériel à mémoire (150) en communication avec le matériel (160) de traitement de données, le matériel à mémoire (150) stockant des instructions qui, lorsqu'elles sont exécutées sur le matériel (160) de traitement de données, amènent le matériel (160) de traitement de données à effectuer des opérations comprenant :

le fait de recevoir un jeton (232) d'accès en écriture en provenance du dispositif (110b) destinataire de partage, le jeton (232) d'accès en écriture comprenant la valeur cryptographique (234) d'accès en écriture ;

le fait de stocker le jeton (232) d'accès en écriture dans un ensemble d'écriture (230) utilisateur, l'ensemble d'écriture (230) utilisateur comprenant une liste d'identifiants (u2) de destinataires de partage associés à des destinataires de partage (10b) ayant un accès en écriture au document (200) ;

le fait de recevoir, en provenance du dispositif (110b) destinataire de partage, un jeton (222) d'accès en lecture pour le dispositif (110b) destinataire de partage comprenant la valeur cryptographique (224) d'accès en lecture et les métadonnées cryptées pour le document (200) ; et

le fait de stocker le jeton (222) d'accès en lecture dans un ensemble de lecture (220) utilisateur, l'ensemble de lecture (220) utilisateur comprenant une liste d'identifiants (u2) de destinataires de partage associés à des destinataires de partage (10b) ayant un accès en lecture au document (200).

**15.** Le système (100) selon la revendication 14, dans lequel les opérations comprennent en outre :

le fait de recevoir une commande (450) de révocation d'accès en écriture en provenance du dispositif (110a) émetteur de partage pour révoquer l'accès en écriture pour le destinataire de partage (10b) pour le document (200) stocké sur le système (150) de stockage distribué ; et

en réponse à la réception de la commande (450) de révocation d'accès en écriture, le fait de supprimer le jeton (232) d'accès en écriture pour le destinataire de partage (10b) de l'ensemble d'écriture (230) utilisateur ; ou

les opérations comprenant en outre :

le fait de recevoir une commande (350) de révocation d'accès en lecture en provenance du dispositif (110a) émetteur de partage pour révoquer l'accès en lecture pour le destinataire de partage (10b) pour le document (200) stocké sur le système (150) de stockage distribué ; et

en réponse à la réception de la commande de révocation de l'accès en lecture (350) :

le fait de retirer de l'ensemble d'écriture (230) utilisateur le jeton (232) d'accès en écriture pour le destinataire de partage (10b) ; et

le fait de retirer de l'ensemble de lecture (220) utilisateur le jeton (222) d'accès en lecture pour le destinataire de partage (10b).

FIG. 1

Read Access Token **222**

212 — Location (u, d)

224 — Cryptographic Read Access Value $\left\{ \dfrac{F(K_d^w, d)}{F(K_u, d)} \right.$

256 — Encrypted Metadata $\left\{ E(K_d^r, M_d) \right.$

## FIG. 2A

Write Access Token **232**

212 — Location (u, d)

234 — Cryptographic Write Access Value $\left\{ \dfrac{F(K_d^w, d)}{F(K_d^w, u)F(K_u, u)} \right.$

## FIG. 2B

FIG. 3A

EP 3 607 485 B1

FIG. 3B

FIG. 4A

FIG. 4B

EP 3 607 485 B1

EP 3 607 485 B1

**FIG. 5A**

FIG. 5B

500c

Search($u, w$)
User $u$ performs a search for keyword $w$. Let $U_r(u)$ be the set of documents that $u$ has read access to.

First, $u$ does the following

1. For each $d \in U_r(u)$, compute $x_d = g^{F(K_d^s, w)F(K_u, d)}$.

2. Send server $u$, $(d, x_d)_{d \in U_r(u)}$

Then, the server does the following

1. Receives $u$, $(d, x_d)_{d \in U_r(u)}$ from $u$.

2. Set $A = \emptyset$.

3. For each $d \in U_r(u)$, retrieve $(y_d, m_d)$ from location $(u, d)$ in UserReadSet. Note that $m_d$ is the encryption of $M_d$.

4. For each $d \in U_r(u)$ such that $(u, d)$ exists in UserReadSet, compute $z_d = x_d^{y_d}$. If $z_d$ appears in WordSet, retrieve the encryption of $M_d(w)$, denote $m_w$. Insert $(d, m_d, m_w)$ into $A$.

5. Return $A$ to $u$.

Finally, $u$ does the following

1. Receives $A$ from the server.

2. For each $a \in A$, compute $M_d = D(K_d^s, m_d)$ and $M_d(w) = D(K_d^r, m_w)$.

3. Using $M_d$ and $M_d(w)$, sort and show the search results.

# FIG. 5C

650

Operation
Request

652 — x

654 — Op

1. Delete
2. Overwrite
3. Add

212 — (u, d)

556 — $m_w$

660 — Query
(u,d)

Document Record Set 210

UserWrite 230

(u,d) | $T_W$

.
.
.

(u_n,d) | $T_{Wn}$

User 10

SSE Manager 160

$M_d(w)$

$m_w = E(K_d^?, M_d(w))$

$x = g^{F(K_d^?, w)F(K_u, u)F(K_d^?, u)}$

234 — y — 232

Write Access
Token $T_W$

FIG. 6A

600b

```
┌─────────────────────────────┐
│ 1. Compute cryptographic    │
│ word set token z            │
│                             │
│         z = x^y             │
│                             │
│ 2. Process Edit Operation   │
│ on z in Word set            │
└─────────────────────────────┘
```

670

```
┌──────────────┐
│  Process     │
│  OP on z     │
│              │
556 ┈ (  m_w  ) │
│              │
└──────────────┘
```

┌──────────────┐
│  User 10     │
└──────────────┘

┌──────────────────┐
│ SSE Manager 160  │
└──────────────────┘

┌────────────────────────────────────┐
│ **Document Record Set 210**         │
│  ┌──────────────────────────────┐   │
│  │        **Word 240**          │   │
│  │ (w,d) ............... (z, m_w)│   │
│  │            •                 │   │
│  │            •                 │   │
│  │            •                 │   │
│  │            •                 │   │
│  │ (w_n,d) ......... (z_n, m_{wn})│  │
│  └──────────────────────────────┘   │
└────────────────────────────────────┘

# FIG. 6B

600c

Edit$(op, u, w, d)$
User $u$ performs $op \in \{add, overwrite, delete\}$ on $w$ in document $d$.

First, $u$ does the following

1. Create $M_d(w)$, the metadata for document $d$ in regards to word $w$.

2. Compute $x = g^{F(K_d^i, w)F(K_u, w)F(K_l^i, w)}$.

3. Send server $(op, x, m = E(K_d^i, M_d(w)), u, d)$.

Then, the server does the following

1. Receives $(op, x, m, u, d)$ from $u$.

2. Retrieve $y$ from location $(u, d)$ into UserWriteSet.

3. Compute $z = x^y$.

4. Perform $op$ on $z$ in WordSet. If $op = delete$, then delete $z$ from WordSet. If $op = add$ or $op = overwrite$, add/overwrite the entry at $z$ with $(z, m)$.

# FIG. 6C

700

RECEIVING A SHARED READ ACCESS COMMAND
FROM A SHAROR

702

RECEIVING A SHARED READ ACCESS REQUEST
FROM A SHAREE

704

DETERMINING A CRYPTOGRAPHIC READ ACCESS
VALUE

706

STORING A READ ACCESS TOKEN FOR THE SHAREE
IN A USER READ SET

708

FIG. 7

800

```
┌─────────────────────────────────────────────┐
│  RECEIVING SHARED WRITE ACCESS PERMISSIONS    │
│              FROM A SHAROR                     │
│                                        802     │
└─────────────────────────────────────────────┘
                      │
                      ▼
┌─────────────────────────────────────────────┐
│  DETERMINING A CRYPTOGRAPHIC WRITE ACCESS     │
│                 VALUE                          │
│                                        804     │
└─────────────────────────────────────────────┘
                      │
                      ▼
┌─────────────────────────────────────────────┐
│  SENDING A WRITE ACCESS TOKEN FOR THE SHAREE  │
│  COMPRISING THE CRYPTOGRAPHIC WRITE ACCESS    │
│  VALUE TO A DISTRIBUTED STORAGE SYSTEM        │
│                                        806     │
└─────────────────────────────────────────────┘
```

# FIG. 8

980

900

SSE Manager

900a

920

930

910

960

900b

940

950

970

EP 3 607 485 B1

900c

49

FIG. 9